(19) Europäisches Patentamt
European Patent Office
Office européen des brevets

(11) EP 4 354 534 A2

(12) **EUROPEAN PATENT APPLICATION**

(43) Date of publication:
**17.04.2024 Bulletin 2024/16**

(21) Application number: **23198368.5**

(22) Date of filing: **19.09.2023**

(51) International Patent Classification (IPC):
***H01M 4/13*** *(2010.01)* ***H01M 4/66*** *(2006.01)*

(52) Cooperative Patent Classification (CPC):
**H01M 4/661; H01M 4/13; H01M 4/666; H01M 4/667; H01M 4/668;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.09.2022 KR 20220118146**

(71) Applicants:
- **Samsung SDI Co., Ltd.**
  **Yongin-si, Gyeonggi-do 17084 (KR)**
- **Seoul National University R & DB Foundation**
  **Seoul 08826 (KR)**

(72) Inventors:
- **Moon, Jongseok**
  **17084 Yongin-si (KR)**
- **Bae, Woojin**
  **17084 Yongin-si (KR)**
- **Lee, Kanghee**
  **17084 Yongin-si (KR)**
- **Lee, Junyong**
  **17084 Yongin-si (KR)**
- **Park, Jinhwan**
  **17084 Yongin-si (KR)**
- **Woo, Hyunsik**
  **17084 Yongin-si (KR)**
- **Kim, Heemin**
  **17084 Yongin-si (KR)**
- **Orapa, Tamwattana**
  **08813 Seoul (KR)**
- **Kang, Kisuk**
  **06327 Seoul (KR)**

(74) Representative: **Michalski Hüttermann & Partner Patentanwälte mbB**
**Kaistraße 16A**
**40221 Düsseldorf (DE)**

(54) **NEGATIVE ELECTRODE FOR LITHIUM METAL BATTERY, LITHIUM METAL BATTERY INCLUDING THE SAME, AND METHOD OF PREPARING THE NEGATIVE ELECTRODE FOR LITHIUM METAL BATTERY**

(57) A negative electrode for a lithium metal battery, a lithium metal battery including the same, and a method of preparing the negative electrode are provided. The negative electrode includes a negative electrode current collector, and a protective layer disposed on the negative electrode current collector. The protective layer includes a first protective layer and a second protective layer disposed between the first protective layer and the negative electrode current collector. The first protective layer includes porous nanostructure particles, and the second protective layer includes polar inorganic particles.

FIG. 1

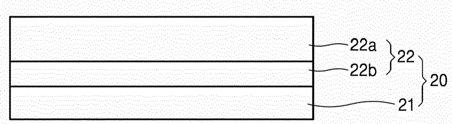


EP 4 354 534 A2

Processed by Luminess, 75001 PARIS (FR)

## Description

## CROSS-REFERENCE TO RELATED APPLICATION

The present application claims priority to and the benefit of Korean Patent Application No. 10-2022-0118146, filed on September 19, 2022, in the Korean Intellectual Property Office, the entire content of which is incorporated herein by reference.

## BACKGROUND

### 1. Field

One or more embodiments of the present disclosure relate to a negative electrode for a lithium metal battery, a lithium metal battery including the same, and a method of preparing a negative electrode for a lithium metal battery.

### 2. Description of the Related Art

Currently commercially available lithium batteries mainly utilize carbon-based negative electrode active materials such as graphite. There is no (substantially no) change in volume of carbon-based negative electrode active materials during charging/discharging, which should ensure the high stability of lithium batteries. Graphite has a low theoretical electric capacity of about 372 milliampere-hours per gram mass (mAh/g).
Lithium metals may be utilized as negative electrode active materials. Lithium metals have a very low theoretical electric capacity of about 3,860 mAh/g. Due to a side reaction between lithium metal and an electrolyte during charging/discharging, dendrites form on a surface of the lithium metal and grow to cause a short circuit between a positive electrode and a negative electrode. As a result, the lifespan characteristics of lithium metal batteries including lithium metals are deteriorated.
In order to implement a lithium battery suitable for such uses, it is desired to provide (or there is a need) for a method of improving lifespan characteristics of a lithium metal battery including a lithium metal.

## SUMMARY

One or more aspects of embodiments are directed toward a negative electrode for a lithium metal battery which has a novel structure.
One or more aspects of embodiments are directed toward a lithium metal battery including a negative electrode which has a novel structure.
One or more aspects of embodiments are directed toward a method of preparing a negative electrode for a lithium metal battery which has a new (e.g., novel) structure.
Additional aspects will be set forth in part in the description which follows and, in part, will be apparent from the description, or may be learned by practice of the presented embodiments of the disclosure.
According to some embodiments, provided is a negative electrode for a lithium metal battery including a negative electrode current collector, and a protective layer provided on the negative electrode current collector, wherein the protective layer includes a first protective layer and a second protective layer provided between the first protective layer and the negative electrode current collector, the first protective layer includes porous nanostructure particles, and the second protective layer includes polar inorganic particles.
According to some embodiments, provided is a lithium metal battery including a positive electrode, the described negative electrode, and an electrolyte provided between the positive electrode and the negative electrode.
According to still other embodiments, provided is a method of preparing a negative electrode for a lithium metal battery, the method including providing a negative electrode current collector, providing a second protective layer on the negative electrode current collector, and providing a first protective layer on the second protective layer, wherein the second protective layer includes porous nanostructure particles, and the first protective layer includes polar inorganic particles.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional view of a negative electrode according to some embodiments of the present disclosure;

FIG. 2 is a cross-sectional view of a negative electrode according to some embodiments of the present disclosure;
FIG. 3 is a cross-sectional view of a negative electrode according to some embodiments of the present disclosure;
FIG. 4 is a cross-sectional view of a negative electrode according to some embodiments of the present disclosure;
FIG. 5 is a schematic view of a lithium battery according to some embodiments of the present disclosure;
FIG. 6 is a schematic view of a lithium battery according to some embodiments of the present disclosure;
FIG. 7 is a schematic view of a lithium battery according to some embodiments of the present disclosure;
FIG. 8 is a cross-sectional view of a lithium battery including a solid electrolyte layer, according to some embodiments of the present disclosure;
FIG. 9 is a cross-sectional view of a lithium battery including a solid electrolyte layer, according to some embodiments of the present disclosure;
FIG. 10 is a scanning electron microscope image of a cross section of a negative electrode prepared in Example 1 according to some embodiments of the present disclosure; and
FIG. 11 is a graph showing lifespan characteristics of lithium metal batteries manufactured in Example 1, Comparative Example 1, and Comparative Example 2, according to some embodiments of the present disclosure.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Rather, the present disclosure is intended to cover all modifications, equivalents, and alternatives falling within the spirit and scope of the present disclosure. Accordingly, the embodiments are merely described, by referring to the drawings, to explain aspects of the present description.

As utilized herein, the term "and/or" includes any and all combinations of one or more of the associated listed items. Expressions such as "at least one of," if (e.g., when) preceding a list of elements, modify the entire list of elements and do not modify the individual elements of the list.

During a charging/discharging process of a lithium metal battery utilizing a lithium metal as a negative electrode active material, a lithium-containing metal layer may be precipitated and dissolved between a negative electrode current collector and an electrolyte layer. As charging/discharging of the lithium metal battery is repeated, the lithium-containing metal layer may include impurities remaining in an electrode, decomposition products of an electrolyte, and/or the like. Therefore, because the lithium-containing metal layer includes such impurities, a surface of the lithium-containing metal layer may become relatively rough and hard. Lithium dendrites are precipitated on the lithium-containing metal layer having such a rough surface. Such lithium dendrites may continue to grow during a charging/discharging process and may cause a short circuit between a positive electrode and a negative electrode. In some embodiments, as charging/discharging of the lithium metal battery is repeated, the electrolyte may be continuously consumed due to side reactions, and thus the cycle characteristics of the lithium metal battery may be rapidly deteriorated.

Because a negative electrode for a lithium metal battery according to an aspect has a new protective layer structure, the formation of lithium dendrites in a negative electrode active material layer may be suppressed or reduced, and the consumption of an electrolyte may be suppressed or reduced, thereby improving the cycle characteristics of a lithium metal battery adopting such a negative electrode.

Hereinafter, as the present disclosure allows for one or more suitable changes and numerous embodiments, specific embodiments will be illustrated in the drawings and described in more detail in the written description. However, this is not intended to limit the present disclosure to particular modes of practice, and it should be appreciated that all changes, equivalents, and substitutes that do not depart from the spirit and technical scope are encompassed in the present disclosure.

The terms utilized herein are merely utilized to describe specific embodiments and are not intended to limit the present disclosure. An expression utilized in the singular encompasses the expression of the plural, unless it has a clearly different meaning in the context. As utilized herein, it is to be understood that the terms such as "include," "includes," "including," "comprise," "comprises," "having," "has," and/or "have" if (e.g., when) utilized are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added. The symbol "/"utilized herein may be interpreted as "and" or "or" according to the context.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described below may be termed a second element, component, region, layer, or section without departing

from the teachings of the present specification.

The term utilized herein is intended to describe only a specific embodiment and is not intended to limit the present inventive concept. As utilized herein, the singular forms "a," "an," and "the" are intended to include the plural forms, including "at least one," unless the content (e.g., amount) clearly indicates otherwise. As used herein, expressions such as "at least one," "one of," and "selected from," if (e.g., when) preceding a list of elements, should not be construed as being limited to the singular. , but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

In the drawings, the thicknesses of layers and regions are exaggerated or reduced for clarity. Like reference numerals in the drawings denote like elements throughout, and duplicative descriptions thereof may not be provided the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and/or the like may be utilized to describe one or more suitable components, such components should not be limited to the above terms. The above terms are utilized only to distinguish one component from another. Components having substantially the same functional configuration in the present specification and drawings are denoted by the same reference numerals, and redundant descriptions thereof will not be provided.

Spatially relative terms such as "beneath," "below," "lower," "above," and "upper" may be utilized herein to easily describe one element or feature's relationship to another element or feature. It will be understood that the spatially relative terms are intended to encompass different orientations of a device in operation in addition to the orientation illustrated in the drawings. For example, if (e.g., when) a device in the drawings is turned over, elements described as "below" or "beneath" other elements or features would then be "above" or "over" the other elements or features. Thus, the example term "below" may encompass both (e.g., opposite) orientations of above and below. The device may be otherwise oriented (rotated 90 degrees or at other orientations), and the spatially relative terms utilized herein may be interpreted accordingly.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

The term "combination(s) thereof" may include a mixture, a laminate, a complex, a copolymer, an alloy, a blend, a reactant of constituents, and/or the like.

Unless otherwise defined, all terms (including chemical, technical, and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

As utilized herein, a "size" of particles refers to, for example, a "particle diameter" of particles. The term "particle diameter" refers to an average diameter when particles are spherical and refers to an average major axis length when particles are non-spherical. A particle diameter may be measured utilizing a particle size analyzer (PSA). A "particle diameter" is, for example, an average particle diameter. An "average particle diameter" refers to, for example, a median particle diameter (D50). The median particle diameter (D50) is a particle size corresponding to a 50% cumulative volume when a particle size distribution measured through a laser diffraction method is calculated from particles having a smaller particle size.

The term "metal" as utilized herein includes all of metals and metalloids such as silicon and germanium in an elemental or ionic state.

The term "alloy" as utilized herein refers to a mixture of two or more metals.

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to a positive electrode active material or a negative electrode active material.

The terms "delithiate" and "delithiating" as utilized herein refer to a process of removing lithium from a positive

electrode active material or a negative electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

Hereinafter, a negative electrode for a lithium metal battery, a lithium metal battery including the same, and a method of preparing the negative electrode for a lithium metal battery according to embodiments will be described in more detail.

**Negative Electrode**

A negative electrode for a lithium metal battery according to some embodiments may include a negative electrode current collector, and a protective layer provided on the negative electrode current collector, wherein the protective layer includes a first protective layer and a second protective layer provided between the first protective layer and the negative electrode current collector, and the protective layer includes porous nanostructure particles, and the second protective layer includes polar inorganic particles.

Because the first protective layer includes the porous nanostructure particles, the first protective layer may selectively transmit lithium ions, and thus it is possible to prevent or reduce an electrolyte from coming into contact with a negative electrode active material layer together with lithium ions. In the case of an organic solvent comes into contact with a lithium metal together with lithium ions, the organic solvent may be decomposed due to a reaction with the lithium metal. Because lithium ions may selectively pass through the first protective layer through pores of the porous nanostructure particles, it is possible to effectively suppress or reduce direct contact between the organic solvent and the lithium metal. Because the second protective layer includes the polar inorganic particles, lithium ions may be uniformly distributed inside the second protective layer and at an interface between the second protective layer and the negative electrode current collector by the polar inorganic particles. Accordingly, a local current density imbalance between the second protective layer and the negative electrode current collector may be suppressed or reduced, and thus a lithium metal may be uniformly plated between the second protective layer and the negative electrode current collector. The lithium metal may be uniformly plated between the second protective layer and the negative electrode current collector, thereby effectively reducing or suppressing the precipitation and/or growth of lithium dendrites due to a local current density imbalance between the second protective layer and the negative electrode current collector. Because the second protective layer includes the polar inorganic particles, it is possible to increase uniformity of lithium ion distribution inside the second protective layer and/or between the second protective layer and the negative electrode current collector.

Referring to FIG. 1, a negative electrode 20 may include a negative electrode current collector 21, and a protective layer 22 provided on the negative electrode current collector 21, wherein the protective layer 22 includes a first protective layer 22a and a second protective layer provided between the first protective layer 22a and the negative electrode current collector 21, the first protective layer 22a includes porous nanostructure particles, and the second protective layer 22b includes polar inorganic particles.

Referring to FIG. 2, a negative electrode 20 may include a negative electrode current collector 21, and a protective layer 22 provided on the negative electrode current collector 21, wherein the protective layer 22 includes a first protective layer 22a and a second protective layer 22b provided between the first protective layer 22a and the negative electrode current collector 21, the first protective layer 22a includes porous nanostructure particles, the second protective layer 22b includes polar inorganic particles, and the negative electrode 20 includes a negative electrode active material layer 23 provided between the second protective layer 22 and the negative electrode current collector 21, wherein the negative electrode active material layer 23 includes lithium metal or a lithium alloy.

**Negative Electrode: Protective Layer**

Referring to FIGS. 1 to 4, the negative electrode 20 may include the negative electrode current collector 21, and the protective layer 22 provided on the negative electrode current collector 21. The protective layer 22 may include the first protective layer 22a and the second protective layer 22b.

The first protective layer 22a includes the porous nanostructure particles. The porous nanostructure particles may have nanostructures in which a plurality of nanopores are arranged in particles. Because the porous nanostructure particles include the nanopores, lithium ions may be selectively transferred through the nanopores, thereby effectively reducing or blocking contact between an organic solvent and the negative electrode active material layer 23. The nanopores may have a size of 10 nanometer (nm) or less. The nanopores may have, for example, a size of about 0.1 nm to about 10 nm, about 0.1 nm to about 5 nm, about 0.1 nm to about 2 nm, or about 0.1 nm to about 1.0 nm. In the case of the nanopores have a size in such a range, selectivity (e.g., chemical selectivity) with respect to lithium ions may be improved. Accordingly, the protective layer 22 may selectively transmit lithium ions included in an electrolyte and may effectively suppress or reduce side reactions of an organic solvent.

The porous nanostructure particles may include the nanopores, and for example, the nanopores may be regularly and/or periodically arranged. The nanopores may be regularly and/or periodically provided, the first protective layer 22a may provide substantially uniform lithium selectivity and/or substantially uniform current density. Therefore, the first protective layer 22a may be more effectively suppress or reduce side reactions caused by an organic solvent and/or an electrolyte. For example, negative ions may be provided on surfaces of the nanopores. Among cations and anions constituting the porous nanostructure particles, anions may constitute a surface area of the nanopores. Accordingly, a portion or the entirety of the surface of the nanopore included in the porous nanostructure particles may be negatively charged. For example, the surfaces of the nanopores included in the porous nanostructure particles may be anionic. Thus, lithium cations may be more effectively transferred through the nanopores.

The porous nanostructure particles may include, for example, a metal organic framework (MOF), polyhedral oligomeric silsesquioxane (POSS), nanoporous silicon, nanoporous nitride oxide, or a combination thereof, but one or more embodiments are not limited thereto. Any material usable as porous nanostructure particles in the art may be utilized.

The MOF has a porous coordination network structure with a high surface area due to an interaction between a metal atom and an organic ligand. While there is no particular limitation, the MOF is a structure in which a metal atom (for example, metal ions) and an organic ligand having two or more coordinating functional groups are consecutively bonded. The MOF is typically a porous body having a plurality of pores therein. The MOF may include any functional molecules in the pores. One or more embodiments are not particularly limited thereto, and examples of the metal atom constituting the MOF may include copper, iron, zinc, cobalt, niobium, zirconium, cadmium, nickel, chromium, vanadium, titanium, molybdenum, zirconium, aluminum, or a combination thereof. One or more metal atoms may constitute the MOF. Examples of the metal ions constituting the metal-organic framework may include $Cu^{2+}$, $Fe^{2+}/Fe^{3+}$, $Mo^{2+}$, $Cr^{2+}$, $Ru^{2+}/Ru^{3+}$, $Mo^{6+}$, $Li^{+}$, $Na^{+}$, $K^{+}$, $Rb^{+}$, $Be^{2+}$, $Mg^{2+}$, $Ca^{2+}$, $Sr^{2+}$, $Ba^{2+}$, $Sc^{3+}$, $Y^{3+}$, $Ti^{4+}$, $Zr^{4+}$, $Hf^{4+}$, $V^{4+}$, $V^{3+}$, $V^{2+}$, $Nb^{3+}$, $Ta^{3+}$, $Cr^{3+}$, $Mo^{3+}$, $W^{3+}$, $Mn^{3+}$, $Mn^{2+}$, $Re^{3+}$, $Re^{2+}$, $Fe^{3+}$, $Fe^{2+}$, $Ru^{3+}$, $Ru^{2+}$, $Os^{3+}$, $Os^{2+}$, $Co^{3+}$, $Co^{2+}$, $Rh^{2+}$, $Rh^{+}$, $Ir^{2+}$, $Ir^{+}$, $Ni^{2+}$, $Ni^{+}$, $Pd^{2+}$, $Pd^{+}$, $Pt^{2+}$, $Pt^{+}$, $Cu^{+}$, $Ag^{+}$, $Au^{+}$, $Zn^{2+}$, $Cd^{2+}$, $Hg^{2+}$, $B^{3+}$, $B^{5+}$, $Al^{3+}$, $Ga^{3+}$, $In^{3+}$, $Ti^{3+}$, $Si^{4+}$, $Si^{2+}$, $Ge^{4+}$, $Ge^{2+}$, $Sn^{4+}$, $Sn^{2+}$, $Pb^{4+}$, $Pb^{2+}$, $As^{5+}$, $As^{3+}$, $As^{+}$, $Sb^{5+}$, $Sb^{3+}$, $Sb^{+}$, $Bi^{5+}$, $Bi^{3+}$, Bi+, or a combination thereof.

The coordinating functional group of the organic ligand may be a functional group capable of coordinating to a metal atom, and examples thereof may include a carboxyl group, an imidazole group, a hydroxyl group, a sulfonic acid group, a pyridine group, a tertiary amine group, an amide group, a thioamide group, or a combination thereof. The organic ligand may include, for example, an organic ligand in which two or more coordinating functional groups are substituted with a framework having a rigid structure (for example, an aromatic ring or an unsaturated bond). Examples of the organic ligand may include a benzene-1,3,5-tricarboxylic acid (BTC), 1,3,5-tris(4-carboxyphenyl) benzene (BTB), a 1,4-benzenedicarboxylic acid ( BDC), a 2,5-dihydroxy-1,4-benzenedicarboxylic acid (DOBDC), a cyclobutyl-1,4-benzenedicarboxylic acid (CB BDC), a 2-amino-1,4-benzene Dicarboxylic acid (H2N BDC), a tetrahydropyrene 2,7-dicarboxylic acid (HPDC), a terphenyl dicarboxylic acid (TPDC), a 2,6-naphthalene dicarboxylic acid (2,6-NDC), a pyrene 2,7-dicarboxylic acid (PDC), a biphenyldicarboxylic acid (BPDC), any dicarboxylic acid having a phenyl compound, a 3,3',5,5'-biphenyltetracarboxylic acid, imidazole, benzimidazole, 2-nitroimidazole, cyclobenzimidazole, imidazole-2-carboxyaldehyde, 4-cyanoimidazole, 6-methylbenzimidazole, 6-bromobenzimidazole, or a combination thereof. Examples of the MOF may include MIL-53, MIL-68, MIL-100 (Fe), MIL-101 (Cr), MOF 801, CAU-10H, MOF 808, IR-MOF-8, CPO-Ni-27, aluminum fumarate, MOF 199, DMOF (Zn), DUT-4, MOF-199 (HKUST-1) represented by Cu-BTC, MOF-177 represented by $Zn_4O$(1,3,5-benzene tribenzoate)$_2$, MOF-5 represented by $Zn_4O$(1,4-benzene dicarboxylate)$_3$ and also referred to as IRMOF-I, MOF-74 (Mg) represented by $Mg_2$(2,5-dihydroxy-1,4-benzene dicarboxylate), MOF-74 (Zn) represented by $Zn_2$(2,5-dihydroxy-1,4-benzene dicarboxylate), MOF-505 represented by $Cu_2$(3,3',5,5'-biphenyl tetracarboxylate), IR-MOF-6 represented by $Zn_4O$(cyclobutyl-1,4-benzene dicarboxylate), IRMOF-3 represented by $Zn_4O$(2-amino-1,4-benzene dicarboxylate)$_3$, IRMOF-11 (represented by $Zn_4O$(terphenyl dicarboxylate)$_3$ or $Zn_4O$ (tetrahydropyrene 2,7-dicarboxylate)$_3$), IRMOF-8 represented by $Zn_4O$ (tetrahydropyrene 2,7-dicarboxylate)$_3$, ZIF-68 represented by Zn(benzimidazolate) (2-nitroimidazolate), ZIF-69 represented by Zn(cyclobenzimidazolate)(2-nitroimidazolate), ZIF-7 represented by Zn(benzimidazolate)2, ZIF-9 represented by Co(benzimidazolate)$_2$, ZIF-11 represented by $Zn_2$(benzimidazolate), ZIF-90 represented by Zn(imidazolate-2-carboxyaldehyde)$_2$, ZIF-82 represented by Zn(4-cyanoimidazolate)(2-nitroimidazolate), ZIF-70 represented by Zn(imidazolate)(2-nitroimidazolate), ZIF-79 represented by Zn(6-methylbenzimidazolate)(2-nitroimidazolate), ZIF-81 represented by Zn(6-bromobenzimidazolate)(2-nitroimidazolate), or a combination thereof, but one or more embodiments are not limited thereto. Any material suitable (e.g., usable) as an MOF may be utilized. The MOF itself may be utilized, but a porous material obtained by heat-treating the MOF in nitrogen and/or the like may be utilized. For example, the porous material may include a porous carbon-based material derived from an MOF and a porous oxide-based material derived from an MOF. Examples of the porous carbon-based material derived

from a MOF may include an iron-containing carbon-based material derived from MIL 100 (Fe). Examples of the porous oxide-based material derived from metal an MOF may include an iron oxide-based material such as iron-containing $Fe_2O_3$ derived from MIL 100 (Fe).

The porous nanostructure particles may have, for example, a size of about 100 nm to about 5 micrometer (μm), about 200 nm to about 3 μm, about 200 nm to about 2 μm, about 200 nm to about 1.5 μm, or about 500 nm to about 1.5 μm. Because the porous nanostructure particles have a size in such a range, it is possible to further improve the cycle characteristics of a lithium metal battery adopting a protective layer that includes the porous nanostructure particles.

A content (e.g., amount) of the porous nanostructure particles may be, for example, in a range of about 50 wt% to about 99 wt%, about 60 wt% to about 95 wt%, or about 70 wt% to about 90 wt% with respect to the total weight of the first protective layer 22a. In the case of the first protective layer 22a includes the porous nanostructure particles in such a content (e.g., amount) range, it is possible to further improve the lithium ion selectivity of the first protective layer 22a and further suppress or reduce side reactions of an electrolyte.

Referring to FIG. 10, a surface of the first protective layer 22a may include protrusions and depressions. The protrusions may include or be formed by the porous nanostructure particles. The depressions may include or be formed by pores between a plurality of adjacent porous nanostructure particle. Because the surface of the first protective layer 22a includes the protrusions and the depressions, the first protective layer 22a may maintain a wide contact area with an electrolyte, and adhesion between a negative electrode and an electrolyte layer may be improved. Therefore, it is possible to prevent or reduce deterioration such as growth of lithium dendrites due to delamination between a negative electrode and an electrolyte layer during a charging/discharging process of a lithium metal battery.

The first protective layer 22a may include a first binder. The first binder may include, for example, styrene-butadiene rubber (SBR), polytetrafluoroethylene, polyvinylidene fluoride (PVDF), polyethylene (PE), a vinylidene fluoride/hexafluoropropylene copolymer, polyacrylonitrile, polymethyl methacrylate, and/or the like, but one or more embodiments are not necessarily limited thereto. Any material usable as a binder in the art may be utilized. The first binder may be provided as a single binder or a plurality of different binders. In the case of the first protective layer 22a does not include the first binder, the first protective layer 22a may be easily separated from the second protective layer 22b and/or the negative electrode current collector 21. The first binder may be, for example, a fluorine-based binder. The fluorine-based binder may include, for example, polytetrafluoroethylene, PVDF, a vinylidene fluoride/hexafluoropropylene copolymer, and/or the like. The first protective layer 22a may include, for example, the first binder in a content (e.g., amount) of about 1 part by weight to about 50 parts by weight, about 5 parts by weight to about 45 parts by weight, or about 10 parts by weight to about 45 parts by weight with respect to about 100 parts by weight of the porous nanostructure particles. The content (e.g., amount) of the first binder may be, for example, in a range of about 1 wt% to about 50 wt% with respect to the total weight of the first protective layer 22a. The first binder may have a weight average molecular weight of about 300,000 Dalton to about 1,000,000 Dalton or about 400,000 Dalton to about 600,000 Dalton. The weight average molecular weight of the first binder may be measured, for example, utilizing gel permeation chromatography (GPC) on a polystyrene standard sample.

The second protective layer 22b may include the polar inorganic particles. The polar inorganic particles may have, for example, a dielectric constant (relative permittivity) of at least 5.0 or more, at least 6.0 or more, at least 7.0 or more, at least 8.0 or more, or at least 9.0 or more. The polar inorganic particles may have, for example, a dielectric constant of about 5 to about 30, about 6 to about 30, about 7 to about 30, about 8 to about 30, or about 9 to about 30. Because the polar inorganic particles have such high permittivity, lithium ions may be uniformly distributed in the second protective layer 22b, and a diffusion rate of lithium ions may be increased. It is possible to prevent or reduce a local current density imbalance inside the second protective layer 22b. In some embodiments, a lithium metal may be uniformly plated at an interface between the second protective layer 22b and the negative electrode current collector 21 or an interface between the second protective layer 22b and the negative electrode active material layer 23, and the generation and/or precipitation of lithium dendrites may be suppressed or reduced. The polar inorganic particles may have, for example, crystallinity. A degree of crystallinity of the polar inorganic particles may be, for example, at least 50 % or more, at least 60 % or more, at least 70 % or more, or at least 80 % or more. The term "degree of crystallinity," as utilized herein, is a ratio of portions having crystallinity to all inorganic particles. The degree of crystallinity of the polar inorganic particles may be calculated from, for example, an intensity ratio of X-ray diffraction (XRD) peak intensity of polar inorganic particles to be analyzed to XRD peak intensity of polar inorganic particles having a crystallinity of 100 %.

The polar inorganic particles may be, for example, nanoparticles having a size in nanoscale range of not more (e.g., less) than 1 μm. Because the polar inorganic particles are nanoparticles having such a size, the uniformity of lithium ion distribution in the second protective layer 22b may be further improved. In the case of a particle diameter of the polar inorganic particles is excessively increased, it may be difficult to improve the uniformity of lithium ion distribution in the second protective layer 22b. The polar inorganic particles may have, for example, a size of about 10 nm to about 900 nm, about 10 nm to about 700 nm, about 10 nm to about 500 nm, about 10 nm to about 400 nm, or about 10 nm to about 200 nm. Because the polar inorganic particles have a particle diameter in such a range, it is possible to further improve the distribution uniformity of lithium ions in the second protective layer 22b.

The size of the polar inorganic particles may be less (e.g., smaller) than, for example, the size of the porous nanostructure particles. The size of the polar inorganic particles may be, for example, at most 50 % (e.g., 50 % or less) of the size of the porous nanostructure particles. The size of the polar inorganic particles may be, for example, in a range of about 1 % to about 50 %, about 1 % to about 40 %, about 1 % to about 30 %, about 5 % to about 30 %, or about 5 % to about 20 % of the size of the porous nanostructure particles. Because the size of the polar inorganic particles is less than the size of the porous nanostructure particles, the second protective layer 22b including the polar inorganic particles may form a substantially uniform interface with the negative electrode current collector 21 and/or the negative electrode active material layer 23 as compared with the first protective layer 22a including the porous nanostructure particles. Therefore, the second protective layer 22b may more effectively suppress or reduce lithium dendrites from being generated or grown at an interface between the second protective layer 22b and the negative electrode current collector 21 and/or between the second protective layer 22b and the negative electrode active material layer 23.

Examples of the polar inorganic particles may include LiF, LiOH, Li2O, Li2CO3, Li3PO4, LiAlO2, Li2O-Al2O3-SiO2-P2O5-TiO2-GeO2, HfO2, SrTiO3, SnO2, CeO2, Na2O, MgO, NiO, CaO, BaO, ZnO, ZrO2, Y2O3, Al2O3, TiO2, SiO2, SiC, Li3+xLa3M2O12 (wherein M=Te, Nb, or Zr and 0≤x≤5), Li1 +x+yAlxTi2-xSiyP3-yO12 (wherein 0<x<2 and 0≤y<3), BaTiO3, Pb(ZrpTi1-p)O3 (PZT) (wherein 0≤p≤1), Pb1-xLaxZr1-yTiyO3 (PLZT) (wherein 0≤x<1 and 0≤y<1), Pb(Mg1/3Nb2/3)O3-PbTiO3 (PMN-PT), LixTiy(PO4)3 (wherein 0<x<2 and 0<y<3), LixAlyTiz(PO4)3 (wherein 0<x<2, 0<y<1, and 0<z<3), Li1+x+y(AlpGa1-p)x(TiqGe1-q)2-xSiyP3-yO12 (wherein 0≤x≤1, ≤y≤1, 0≤p≤1, and 0≤q≤1), LixLayTiO3 (wherein 0<x<2 and 0<y<3), LixGeyPzSw (wherein 0<x<4, 0<y<1, 0<z<1, and 0<w<5), LixNy (wherein 0<x<4 and 0<y<2), LixSiySz (wherein 0<x<3, 0<y<2, and 0<z<4), LixPySz (wherein 0≤x<3, 0<y<3, and 0<z<7), or a combination thereof, but one or more embodiments are not necessarily limited thereto. Any material usable as a polar inorganic particle in the art may be utilized.

A content (e.g., amount) of the polar inorganic particles may be, for example, in a range of about 1 wt% to about 50 wt%, about 5 wt% to about 40 wt%, or about 10 wt% to about 30 wt% with respect to the total weight of the second protective layer 22b. Because the second protective layer 22b includes the polar inorganic particles in such a content (e.g., amount) range, it is possible to improve the distribution uniformity of lithium ions in the second protective layer 22b and more effectively suppress or reduce the generation and/or growth of lithium dendrites.

The second protective layer 22b may include a second binder. The second binder may include, for example, SBR, polytetrafluoroethylene, PVDF, PE, a vinylidene fluoride/hexafluoropropylene copolymer, polyacrylonitrile, polymethyl methacrylate, and/or the like, but one or more embodiments are not necessarily limited thereto. Any material usable as a binder in the art may be utilized. The second binder may be provided as a single binder or a plurality of different binders. In the case of the second protective layer 22b does not include the second binder, the second protective layer 22b may be easily separated from the first protective layer 22a and/or the negative electrode current collector 21. The second binder may be, for example, a fluorine-based binder. The fluorine-based binder may include, for example, polytetrafluoroethylene, PVDF, a vinylidene fluoride/hexafluoropropylene copolymer, and/or the like. The second protective layer 22b may include, for example, the second binder in a content (e.g., amount) of about 100 parts by weight to about 1,000 parts by weight, about 100 parts by weight to about 500 parts by weight, or about 100 parts by weight to about 300 parts by weight with respect to about 100 parts by weight of the polar inorganic particles. The content (e.g., amount) of the second binder may be, for example, in a range of about 50 wt% to about 90 wt% with respect to the total weight of the second protective layer 22b. The second binder provided in the second protective layer 22b may be the same as or different from the first binder provided in the first protective layer 22a. The second binder may have a weight average molecular weight of about 300,000 Dalton to about 1,000,000 Dalton or about 400,000 Dalton to about 600,000 Dalton. The weight average molecular weight of the second binder may be measured, for example, utilizing GPC on a polystyrene standard sample.

The first protective layer 22a may have, for example, a thickness of about 100 nm to about 20 µm, about 500 nm to about 20 µm, about 1 µm to about 20 µm, or about 1 µm to about 15 µm. In the case of the first protective layer 22a has a thickness in such a range, decomposition of an electrolyte may be more effectively suppressed or reduced, thereby further improving the cycle characteristics of a lithium metal battery including the first protective layer 22a. The second protective layer 22b may have, for example, a thickness of about 100 nm to about 15 µm, about 500 nm to about 15 µm, about 1 µm to about 15 µm, or about 1 µm to about 10 µm. In the case of the second protective layer 22b has a thickness in such a range, it is possible to improve the distribution uniformity of lithium ions and further improve the cycle characteristics of a lithium metal battery including the second protective layer 22b. The protective layer 22 may have, for example, a total thickness of about 200 nm to about 25 µm, about 500 nm to about 25 µm, about 2 µm to about 25 µm, or about 2 µm to about 20 µm. In the case of the protective layer 22 has a thickness in such a range, it is possible to effectively suppress or reduce decomposition of an electrolyte and suppress or reduce a local current density imbalance, thereby effectively preventing or reducing the generation and/or growth of lithium dendrites. Accordingly, it is possible to further improve the cycle characteristics of a lithium metal battery including the protective layer 22. In the case of the thickness of the protective layer 22 excessively increases, an energy density of a lithium metal battery may decrease. In the case of the thickness of the protective layer 22 is excessively reduced, an improvement in cycle

characteristics of a lithium metal battery may be insignificant.

The thickness of the second protective layer 22b may be less than the thickness of the first protective layer 22a. The thickness of the second protective layer 22b may be at most 95%, (e.g., or less) or at most 90 %, (e.g., or less) of the thickness of the first protective layer 22a. The thickness of the second protective layer 22b may be in a range of about 10 % to about 95 %, about 30 % to about 95 %, about 50 % to about 95 %, or about 70 % to about 95 % of the thickness of the first protective layer 22a. Because the thickness of the second protective layer 22b is less than the thickness of the first protective layer 22a, an overall structural strength of the protective layer 22 may be improved and a durability of the protective layer 22 may be improved.

Referring to FIGS. 3 and 4, the protective layer 22 may be additionally provided on side surfaces of the negative electrode active material layer 23 and/or the negative electrode current collector 21.

Referring to FIG. 3, the negative electrode 20 may include the negative electrode current collector 21, and the protective layer 22 provided on the negative electrode current collector 21, wherein the protective layer 22 includes the first protective layer 22a and the second protective layer 22b provided between the first protective layer 22a and the negative electrode current collector 21, the first protective layer 22a includes porous nanostructure particles, the second protective layer 22b includes polar inorganic particles, and the protective layer 22 is provided to extend to at least one side surface of the negative electrode current collector 21. The protective layer 22 may be provided to extend to the side surface of the negative electrode current collector 21. The protective layer 22 may completely cover the side surface of the negative electrode current collector 21. The protective layer 22 may be provided to extend to at least one side surface of the negative electrode current collector 21, thereby more effectively protecting a lithium metal layer plated between the protective layer 22 and the negative electrode current collector 21.

Referring to FIG. 4, the negative electrode 20 may include the negative electrode current collector 21, and the protective layer 22 provided on the negative electrode current collector 21, wherein the protective layer 22 includes the first protective layer 22a and the second protective layer 22b provided between the first protective layer 22a and the negative electrode current collector 21, the first protective layer 22a includes porous nanostructure particles, the second protective layer 22b includes polar inorganic particles, the negative electrode active material layer 23 includes lithium metal or a lithium alloy, and the protective layer 22 is provided to extend to at least one side surface of the negative electrode active material layer 23 and/or the negative electrode current collector 21. The protective layer 22 may completely cover the negative electrode active material layer 23 and may extend to the side surface of the negative electrode current collector 21. The protective layer 22 may completely cover the side surfaces of the negative electrode active material layer 23 and/or the negative electrode current collector 21. Because the protective layer 22 extends to at least one side surface of the negative electrode active material layer 23 and/or the negative electrode current collector 21, the negative electrode active material layer 23 may be more effectively protected thereby.

**Negative Electrode: Negative Electrode Active Material Layer**

Referring to FIGS. 2 and 4, the negative electrode 20 may further include the negative electrode active material layer 23 provided between the negative electrode current collector 21 and the protective layer 22. The negative electrode active material layer 23 may include, for example, lithium metal or a lithium alloy.

The negative electrode active material layer 23 may include, for example, lithium foil, lithium powder, plated lithium, carbon-based material, or a combination thereof. A negative electrode active material layer including a lithium foil may be, for example, a lithium metal layer. A negative electrode active material layer including a lithium powder may be prepared by applying a slurry including a lithium powder, a binder, and/or the like on a negative electrode current collector. The binder may be, for example, a fluorine-based binder such as PVDF. The negative electrode active material layer 23 may not include (e.g., may exclude) a (e.g., any) carbon-based negative electrode active material. Thus, the negative electrode active material layer 23 may be made of a metal-based negative electrode active material. The negative electrode active material layer 23 may also be a plated lithium metal layer. A lithium metal layer, which is plated between the negative electrode current collector 21 and the protective layer 22 through charging after the negative electrode 20 not including the negative electrode active material layer 23, a positive electrode, and an electrolyte are assembled to manufacture a lithium battery, may be further included as the negative electrode active material layer 23.

The negative electrode active material layer 23 may have, for example, a thickness of about 0.1 μm to about 100 μm, about 0.1 μm to about 80 μm, about 1 μm to about 80 μm, or about 10 μm to about 80 μm, but one or more embodiments are not necessarily limited to such a range. The thickness of the negative electrode active material layer 23 may be adjusted according to the required shape, capacity, and/or the like of a lithium metal battery. In the case of the thickness of the negative electrode active material layer 23 excessively increases, the structural stability of a lithium metal battery may deteriorate, and side reactions may increase. In the case of the thickness of the negative electrode active material layer 23 excessively decreases, an energy density of a lithium metal battery may decrease. The lithium foil may have, for example, a thickness of about 1 μm to about 50 μm, about 1 μm to about 30 μm, about 10 μm to about 30 μm, or about 10 μm to about 80 μm. In the case of the lithium foil has a thickness in such a range, it is possible

to further improve the lifespan characteristics of a lithium battery including a protective layer. The lithium powder may have, for example, a particle diameter of about 0.1 μm to about 3 μm, about 0.1 μm to about 2 μm, or about 0.1 μm to about 2 μm. In the case of the lithium powder has a thickness in such a range, it is possible to further improve the lifespan characteristics of a lithium battery including a protective layer. The plated lithium metal layer may have, for example, a thickness of about 1 μm to about 80 μm, or about 10 μm to about 80 μm.

**Negative Electrode: Negative Electrode Current Collector**

Referring to FIGS. 1 to 4, the negative electrode 20 may include the negative electrode current collector 21.

The negative electrode current collector 21 may include, for example, a first metal substrate. The first metal substrate may include a first metal as a main component or may be made of the first metal. A content (e.g., amount) of the first metal included in the first metal substrate may be, for example, at least 90 wt%, at least 95 wt% or more, at least 99 wt% or more, or at least 99.9 wt% or more with respect to the total weight of the first metal substrate. The first metal substrate may be made of, for example, a material that does not react with lithium, that is, does not form an alloy and/or compound with lithium. Examples of the first metal may include copper (Cu), nickel (Ni), stainless steel (SUS), iron (Fe), and/or cobalt (Co), but one or more embodiments are not necessarily limited thereto. Any material suitable as a current collector in the art may be utilized. The first metal substrate may include or be made of, for example, one of the described metals or an alloy of two or more metals. The first metal substrate may include or be, for example, in the form of a sheet or foil. The negative electrode current collector 21 may have, for example, a thickness of about 5 μm to about 50 μm, about 10 μm to about 50 μm, about 10 μm to about 40 μm, or about 10 μm to about 30 μm, but one or more embodiments are not necessarily limited to such a range. The thickness of the negative electrode current collector 21 may be adjusted according to the required shape, capacity, and/or the like of a lithium metal battery.

The negative electrode current collector 21 may further include a coating layer, which includes a second metal, on the first metal substrate.

The negative electrode current collector 21 may include, for example, the first metal substrate, and the coating layer provided on the first metal substrate and including the second metal. The second metal has higher Mohs hardness than the first metal. For example, because the coating layer including the second metal is harder than a substrate including the first metal, deterioration of the first metal substrate may be prevented or reduced. A material constituting the first metal substrate may have, for example, a Mohs hardness of at most 5.5 or less. The first metal may have, for example, a Mohs hardness of at most 5.5 or less, at most 5.0 or less, at most 4.5 or less, at most 4.0 or less, at most 3.5 or less, or at most 3.0 or less. The first metal may have, for example, a Mohs hardness of about 2.0 to about 6.0. The coating layer may include the second metal. The coating layer may include, for example, the second metal as a main component or may be made of the second metal. A content (e.g., amount) of the second metal included in the coating layer may be, for example, in a range of at least 90 wt% or more, at least 95 wt% or more, at least 99 wt% or more, or at least 99.9 wt% or more with respect to the total weight of the coating layer. The coating layer may be made of, for example, a material that does not react with lithium, that is, does not form an alloy and/or compound with lithium. A material constituting the coating layer may have, for example, a Mohs hardness of at least 6.0 or more. For example, the second metal may have a Mohs hardness of at least 6.0 or more, at least 6.5 or more, at least 7.0 or more, at least 7.5 or more, at least 8.0 or more, at least 8.5 or more, or at least 9.0 or more. The second metal may have, for example, a Mohs hardness of about 6.0 to about 12. In the case of the Mohs hardness of the second metal is excessively low, it may be difficult to suppress or reduce deterioration of the negative electrode current collector 21. In the case of the Mohs hardness of the second metal is excessively high, processing of the second metal may not be easy. The second metal may include, for example, at least one selected from among titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The coating layer may be made of, for example, one of the described metals or an alloy of two or more metals. A difference in Mohs hardness between the first metal included in the first metal substrate and the second metal included in the coating layer may be, for example, at least 2 or more, at least 2.5 or more, at least 3 or more, at least 3.5 or more, or at least 4 or more. In the case of the first metal and the second metal have such a difference in Mohs hardness, it is possible to further suppress or reduce deterioration of the negative electrode current collector 21. The coating layer may have a single layer structure or a multi-layer structure including two or more layers. The coating layer may have, for example, a two-layer structure including a first coating layer and a second coating layer. The coating layer may have, for example, a three-layer structure including a first coating layer, a second coating layer, and a third coating layer. The coating layer may have, for example, a thickness of about 10 nm to about 1 μm, 50 nm to 500 nm, 50 nm to 200 nm, or 50 m to 150 nm. In the case of the coating layer is excessively thin, it may be difficult to suppress or reduce non-substantially uniform growth of a lithium-containing metal layer. As the thickness of the coating layer increases, the cycle characteristics of a lithium battery may be improved. However, in the case of the coating layer is excessively thick, an energy density of a lithium battery may be decreases, and it may not be easy to form the coating layer. The coating layer may be provided on the first metal substrate through, for example, vacuum deposition, sputtering,

plating, and/or the like, but one or more embodiments are not necessarily limited to such a method. Any method capable of forming a coating layer in the art may be utilized.

In some embodiments, the negative electrode current collector 21 may include, for example, a base film and a metal layer provided on one surface or both (e.g., opposite) surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Because the base film includes the insulating thermoplastic polymer, in the case of a short circuit occurs, the base film may be softened or liquefied to block or reduce the operation of a battery, thereby suppressing a rapid increase in current. The metal layer may include, for example, copper (Cu), stainless steel, titanium (Ti), iron (Fe), cobalt (Co), nickel (Ni), or an alloy thereof. The metal layer may correspond to, for example, a first metal substrate. The metal layer may additionally include a coating layer including a second metal. The negative electrode current collector 21 may additionally include a metal chip and/or a lead tab. For more specific details of the base film, the metal layer, the metal chip, and the lead tab of the negative electrode current collector 21, the positive electrode current collector is referred to. Because the negative electrode current collector 21 has such a structure, a weight of a negative electrode may be reduced, thereby improving the energy density of the negative electrode and a lithium battery.

**Negative Electrode: Anode Interlayer**

Referring to FIGS. 1 and 3, the negative electrode 20 may further include an anode interlayer provided between the negative electrode current collector 21 and the protective layer 22. Referring to FIGS. 2 and 4, the negative electrode 20 may further include an anode interlayer provided between the protective layer 22 and the negative electrode active material layer 23. Because the negative electrode 20 additionally includes the anode interlayer, it is possible to more effectively suppress or reduce the generation and/or growth of lithium dendrites in the negative electrode 20. The anode interlayer may not be provided.

The anode interlayer may include, for example, a negative electrode active material and a binder. The negative electrode active material may be a negative electrode material that may be lithiated and delithiated. The negative electrode active material included in the anode interlayer may have, for example, a particle form. The negative electrode active material having a particle form may have, for example, an average particle diameter of about 10 nm to about 4 μm, about 10 nm to about 1 μm, about 10 nm to about 500 nm, about 10 nm to about 100 nm, or about 20 nm to about 80 nm. Because the negative electrode active material has an average particle diameter in such a range, reversible plating and/or dissolution of lithium may be more easily performed during charging/discharging. The average particle diameter of the negative electrode active material is, for example, a median diameter (D50) measured utilizing a laser type or kind particle size distribution meter.

The negative electrode active material included in the anode interlayer may include, for example, at least one selected from among a carbon-based negative electrode active material and a metal or metalloid negative electrode active material. The carbon-based negative electrode active material may be, for example, amorphous carbon. Examples of the carbon-based negative electrode active material may include carbon black (CB), acetylene black (AB), furnace black (FB), Ketjen black (KB), graphene, and/or the like, but one or more embodiments are not necessarily limited thereto. Any material classified as amorphous carbon in the art may be utilized. The amorphous carbon may be carbon that has no crystallinity or very low crystallinity and may be distinguished from crystalline carbon or graphite-based carbon. The metal or metalloid negative electrode active material may include at least one selected from among gold (Au), platinum (Pt), palladium (Pd), silicon (Si), silver (Ag), aluminum (Al), bismuth (Bi), tin (Sn), and zinc (Zn), but one or more embodiments are not necessarily limited thereto. Any material, which is utilized as a metal negative electrode active material or a metalloid negative electrode active material and forms an alloy or compound with lithium in the art, may be utilized. For example, nickel (Ni) does not form an alloy with lithium and thus is not a metal negative electrode active material in the present specification. The anode interlayer may include one type or kind of negative electrode active material among such negative electrode active materials or a mixture of a plurality of different negative electrode active materials. The anode interlayer may include, for example, a mixture of amorphous carbon and at least one selected from among gold (Au), platinum (Pt), palladium (Pd), silicon (Si), silver (Ag), aluminum (Al), bismuth (Bi), tin (Sn), and zinc (Zn). A mixing ratio of the mixture may be, for example, a weight ratio of about 10:1 to about 1:2, about 10:1 to about 1:1, about 7:1 to about 1:1, about 5:1 to about 1:1, or about 4:1 to about 2:1. The negative electrode active material included in the anode interlayer may include, for example, a mixture of first particles including amorphous carbon and second particles including a metal or metalloid. Examples of the metal may include gold (Au), platinum (Pt), palladium (Pd), silicon (Si), silver (Ag), aluminum (Al), bismuth (Bi), tin (Sn), zinc (Zn), and/or the like. A content (e.g., amount) of the second particles may be in a range of about 8 wt% to about 60 wt%, about 10 wt% to about 50 wt%, about 15 wt% to about 40 wt%, or about 20 wt% to about 30 wt% with respect to the total weight of the mixture. Because the second particles are included in a content (e.g., amount) in such a range, for example, the cycle characteristics of a lithium battery may be further improved.

The binder included in the anode interlayer may include, for example, SBR, polytetrafluoroethylene, PVDF, PE, a vinylidene fluoride/hexafluoropropylene copolymer, polyacrylonitrile, polymethyl methacrylate, and/or the like, but one or more embodiments are not necessarily limited thereto. Any material usable as a binder in the art may be utilized. The binder may be provided as a single binder or a plurality of different binders. If (e.g., when) the anode interlayer does not include a binder, the anode interlayer may be easily separated from the protective layer 22 or the negative electrode current collector 21. A content (e.g., amount) of the binder included in the anode interlayer may be, for example, in a range of about 1 wt% to about 20 wt% with respect to the total weight of the anode interlayer.

The anode interlayer may have, for example, a thickness of about 1 μm to about 20 μm, about 1 μm to about 15 μm, about 2 μm to about 10 μm, or about 3 μm to about 7 μm. The thickness of the anode interlayer may be, for example, in a range of about 1 % to about 50 %, about 1 % to about 30 %, about 1 % to about 10 %, or about 1 % to about 5 % of a thickness of a positive electrode active material layer. If (e.g., when) the anode interlayer is excessively thin, lithium dendrites formed between the anode interlayer and the negative electrode current collector may collapse the anode interlayer, which may make it difficult to improve the cycle characteristics of a lithium battery. If (e.g., when) the thickness of the anode interlayer layer excessively increases, an energy density of a lithium battery adopting the negative electrode 20 may decrease, and the cycle characteristics thereof may be difficult to improve. If (e.g., when) the thickness of the anode interlayer decreases, for example, charge capacity of the anode interlayer may also decrease. The charge capacity of the anode interlayer may be, for example, in a range of about 0.1 % to about 50 %, about 1 % to about 30 %, about 1 % to about 10 %, about 1 % to about 5%, or about 1 % to about 2% of charge capacity. If (e.g., when) the charge capacity of the anode interlayer is excessively low, lithium dendrites formed between the anode interlayer and the negative electrode current collector may collapse the anode interlayer, which may make it difficult to improve the cycle characteristics of a lithium battery. If (e.g., when) the charge capacity of the anode interlayer excessively increases, an energy density of a lithium battery adopting the negative electrode 20 may decrease, and the cycle characteristics thereof may be difficult to improve. Charge capacity of the positive electrode active material layer is obtained by multiplying a charge capacity density (mAh/g) of a positive electrode active material by a mass of the positive electrode active material in the positive electrode active material layer. If (e.g., when) several types (kinds) of positive electrode active materials are utilized, a value of charge capacity density×mass is calculated for each positive electrode active material, and the sum of the values is the charge capacity of the positive electrode active material layer. The charge capacity of the anode interlayer is also calculated in substantially the same way. For example, the charge capacity of the anode interlayer is obtained by multiplying a charge capacity density (mAh/g) of the negative electrode active material by a mass of the negative electrode active material in the anode interlayer. If (e.g., when) several types (kinds) of negative electrode active materials are utilized, a value of charge capacity density×mass is calculated for each negative electrode active material, and the sum of the values is the charge capacity of the anode interlayer. Here, charge capacity densities of a positive electrode active material and a negative electrode active material are capacities estimated utilizing an all-solid half-cell utilizing a lithium metal as a counter electrode. Charge capacities of a positive electrode active material layer and a negative electrode intermediate layer are directly measured by measuring charge capacity utilizing an all-solid half-cell. If (e.g., when) the measured charge capacity is divided by a mass of each active material, a charge capacity density is obtained. In some embodiments, charge capacities of a positive electrode active material layer and a negative electrode intermediate layer may be initial charge capacity measured during charging of a first cycle.

**Lithium Battery**

A lithium battery according to some embodiments may include a positive electrode, the described negative electrode, and an electrolyte provided between the positive electrode and the negative electrode. The lithium battery may include the described negative electrode and thus may have improved capacity and excellent or suitable lifespan characteristics at the same time.

The lithium battery may be, for example, a lithium primary battery, a lithium secondary battery, a lithium-sulfur battery, a lithium-air battery, and/or the like but is not limited thereto. Any lithium battery utilized in the art may be utilized.

For example, a lithium battery may be manufactured through the following example method, but one or more embodiments are not necessarily limited to such a method. The method may be adjusted according to required conditions.

**Negative Electrode**

The described negative electrode is prepared.

Positive Electrode

First, a positive electrode active material, a conductive agent, a binder, and a solvent are mixed to prepare a positive electrode active material composition. The prepared positive electrode active material composition is applied

directly on an aluminum current collector and dried to prepare a positive electrode plate on which a positive electrode active material layer is formed. In some alternative embodiments, the positive electrode active material composition is cast on a separate support, and then a film obtained by being peeled off of the support is laminated on the aluminum current collector to prepare a positive electrode plate on which a positive electrode active material layer is formed.

As the positive electrode active material, any material, which is a lithium-containing metal oxide and is commonly utilized in the art, may be utilized without limitation. For example, at least one composite oxide of lithium and a metal selected from among cobalt, manganese, nickel, and a combination thereof may be utilized. A specific example of the positive electrode active material may include a compound represented by any one selected from among formulas of $Li_aA_{1-b}B_bD_2$ (wherein 0.90≤a≤1 and 0≤b≤0.5), $Li_aE_{1-b}B_bO_{2-c}D_c$ (wherein 0.90≤a≤1, 0≤b≤0.5, and 0≤c≤ 0.05), $LiE_{2-b}B_bO_{4-c}D_c$ (wherein 0≤b≤0.5 and 0≤c≤0.05), $Li_aNi_{1-b-c}Co_bB_cD_\alpha$ (wherein 0.90≤a≤1, 0≤b≤0.5, 0≤c≤0.05, and 0<α≤2), $Li_aNi_{1-b-c}Co_bB_cO_{2-\alpha}F_\alpha$ (wherein 0.90≤a≤1, 0≤b≤0.5, 0≤c≤0.05, and 0<α<2), $Li_aNi_{1-b-c}Co_bB_cO_{2-\alpha}F_2$ (wherein 0.90≤a≤1, 0≤b≤0.5, 0≤c≤0.05, and 0<α<2), $Li_aNi_{1-b-c}Mn_bB_cD_\alpha$ (wherein 0.90≤a≤1, 0≤b≤0.5, 0≤c≤0.05, and 0<α≤2), $Li_aNi_{1-b-c}Mn_bB_cO_{2-\alpha}F_\alpha$ (wherein 0.90≤a≤1, 0≤b≤0.5, 0≤c≤0.05, and 0<α<2), $Li_aNi_{1-b-c}Mn_bB_cO_{2-\alpha}F_2$ (wherein 0.90≤a≤1, 0≤b≤0.5, 0≤c≤0.05, and 0<α<2), $Li_aNi_bE_cG_dO_2$ (wherein 0.90≤a≤1, 0≤b≤0.9, and 0≤c≤0.5, and 0.001≤d≤0.1), $LiaNibCocMndGeO_2$ (wherein 0.90≤a≤1, 0≤b≤0.9, 0≤c≤0.5, 0≤d≤.5, and 0.001≤e≤0.1), $LiaNiGbO_2$ (wherein 0.90≤a≤1 and 0.001≤b≤0.1), $LiaCoGbO_2$ (wherein 0.90≤a≤1 and 0.001≤b≤0.1), $LiaMnGbO_2$ (wherein 0.90≤a≤1 and 0.001≤b≤0.1), $LiaMn_2GbO_4$ (wherein 0.90≤a≤1 and 0.001≤b≤0.1), $QO_2$, $QS_2$, $LiQS_2$, $V_2O_5$, $LiV_2O_5$, $LiIO_2$, $LiNiVO_4$, $Li_{(3-f)}J2(PO_4)_3$ (wherein 0≤f≤2), $Li_{(3-f)}Fe_2(PO_4)_3$ (wherein 0≤f≤2), and $LiFePO_4$.

In the formulas representing the described compounds, A may be Ni, Co, Mn, or a combination thereof, B may be Al, Ni, Co, Mn, Cr, Fe, Mg, Sr, V, a rare earth element, or a combination thereof, D may be O, F, S, P, or a combination thereof, E may be Co, Mn, or a combination thereof, F may be F, S, P, or a combination thereof, G may be Al, Cr, Mn, Fe, Mg, La, Ce, Sr, V, or a combination thereof, Q may be Ti, Mo, Mn, or a combination thereof, I may be Cr, V, Fe, Sc, Y, or a combination thereof, and J may be V, Cr, Mn, Co, Ni, Cu, or a combination thereof. It is also possible to utilize a compound in which a coating layer is added to a surface of the above compound, and it is also possible to utilize a mixture of the above compound and a compound in which a coating layer is added. The coating layer added to the surface of the above compound may include, for example, a coating element compound of an oxide or hydroxide of a coating element, an oxyhydroxide of the coating element, an oxycarbonate of the coating element, or a hydroxycarbonate of the coating element. A compound constituting the coating layer is amorphous or crystalline. The coating element included in the coating layer may include Mg, Al, Co, K, Na, Ca, Si, Ti, V, Sn, Ge, Ga, B, As, Zr, or a mixture thereof. A method of forming a coating layer may be selected within a range that does not adversely affect the physical properties of a positive electrode active material. A coating method may include, for example, spray coating, dipping, and/or the like. Because a specific coating method may be well understood by those skilled in the art, a detailed description thereof will not be provided.

The positive electrode active material may include, for example, $Li_aNi_xCo_yM_zO_{2-b}A_b$ (wherein 1.0≤a≤1.2, 0≤b≤0.2, 0.8≤x<1, 0<y≤0.3, 0<z≤0.3, x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is F, S, Cl, Br, or a combination thereof), $LiNi_xCo_yMn_zO_2$ (wherein 0.8≤x≤0.95, 0≤y≤0.2, 0<z≤0.2, and x+y+z=1), $LiNi_xCo_yAl_zO_2$ (0.8≤x≤0.95, 0≤y≤0.2, 0<z≤0.2, and x+y+z=1), $LiNi_xCo_yMn_zAl_wO_2$ (0.8≤x≤0.95, 0≤y≤0.2, 0<z≤0.2, 0<w≤0.2, and x+y+z+w=1), $Li_aCo_xM_yO_{2-b}A_b$ (1.0≤a≤1.2, 0≤b≤0.2, 0.9≤x≤1, 0≤y≤0.1, x+y=1, M is manganese (Mn), niobium (Nb), vanadium (V), magnesium (Mg), gallium (Ga), silicon (Si), tungsten (W), molybdenum (Mo), iron (Fe), chromium (Cr) ), copper (Cu), zinc (Zn), titanium (Ti), aluminum (Al), boron (B), or a combination thereof, and A is F, S, Cl, Br, or a combination thereof), $Li_aNi_xMn_yM'_zO_{2-b}A_b$ (1.0≤a≤1.2, 0≤b≤0.2, 0<x≤0.3, 0.5≤y<1, 0<z≤0.3, x+y+z=1, M' is cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), or a combination thereof, and A is F, S, Cl, Br, or a combination thereof), $Li_aM1_xM2_yPO_{4-b}X_b$ (wherein 0.90≤a≤1.1, 0≤x≤0.9, 0≤y≤0.5, 0.9<x+y<1.1, 0≤b≤2, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof), or $Li_aM3_zPO_4$ (0.90<_a<_1.1, 0.9≤z≤1.1, and M3 is chromium (Cr), manganese (Mn), iron (Fe), cobalt (Co), nickel (Ni), copper (Cu), zirconium (Zr), or a combination thereof).

Examples of the conductive agent may include CB, graphite particles, natural graphite, artificial graphite, acetylene black, KB, or a carbon fiber; carbon nanotubes; a metal powder, a metal fiber, or a metal tube of copper, nickel, aluminum, or silver; and a conductive polymer such as a polyphenylene derivative, but one or more embodiments are not limited thereto. Any material utilized as a conductive material in the art may be utilized. In some embodiments, the negative electrode may not include (e.g., may exclude), for example, a separate conductive material.

Examples of the binder may include a vinylidene fluoride/hexafluoropropylene copolymer, PVDF, polyacrylonitrile, polymethyl methacrylate, polytetrafluoroethylene (PTFE), a mixture of the above polymers, a SBR-based polymer,

and/or the like. Example of the solvent may include N-methylpyrrolidone (NMP), acetone, water, and/or the like, but one or more embodiments are not necessarily limited thereto. Any material utilized in the art may be utilized.

A plasticizer or a pore former may be further added to the positive electrode active material composition to form pores in an electrode plate.

Contents of the positive electrode active material, the conductive agent, the binder, and the solvent utilized in the positive electrode are at levels commonly or suitably utilized in a lithium battery. According to the utilize and configuration of a lithium battery, one or more of the conductive material, the binder, and the solvent may not be provided.

The content (e.g., amount) of the binder included in the positive electrode may be in a range of about 0.1 wt% to about 10 wt% or about 0.1 wt% to about 5 wt% with respect to the total weight of the positive electrode active material layer. A content (e.g., amount) of the positive electrode active material included in the positive electrode may be in a range of about 80 wt% to about 99 wt%, about 90 wt% to about 99 wt%, or about 95 wt% to about 99 wt% of the total weight of the positive electrode active material layer.

The positive electrode current collector may include a plate, a foil, and/or the like made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. The positive electrode current collector may have, for example, a thickness of about 1 μm to about 100 μm, about 1 μm to about 50 μm, about 5 μm to about 25 μm, or about 10 μm to about 20 μm.

The positive electrode current collector may include, for example, a base film and a metal layer provided on one surface or both (e.g., opposite) surfaces of the base film. The base film may include, for example, a polymer. The polymer may be, for example, a thermoplastic polymer. The polymer may include, for example, PET, PE, PP, PBT, PI, or a combination thereof. The base film may include, for example, an insulator. Because the base film includes the insulating thermoplastic polymer, if (e.g., when) a short circuit occurs, the base film may be softened or liquefied to block or reduce the operation of a battery, thereby suppressing a rapid increase in current. The metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut due to an overcurrent to perform a short circuit prevention function. A limit current and a maximum current may be adjusted by adjusting a thickness of the metal layer. The metal layer may be plated or deposited on the base film. If (e.g., when) the thickness of the metal layer is decreased, the limit current and/or the maximum current of the positive electrode may be reduced, thereby improving the stability of a lithium battery during a short circuit. A lead tab may be added onto the metal layer to be connect to the outside. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake of the same material as a metal of the metal layer. The metal chip may be, for example, a metal foil or a metal mesh. The metal chip may be, for example, an aluminum foil, a copper foil, or a SUS foil. The metal chip may be provided on the metal layer to then be welded to the lead tab so that the lead tab may be welded to a metal chip/metal layer stack or a metal chip/metal layer/base film stack. While the base film, the metal layer, and/or the metal chip are melted during welding, the metal layer or a metal layer/metal chip stack may be electrically connected to the lead tab. A metal chip and/or lead tab may be added to a portion on the metal layer. The base film may have, for example, a thickness of about 1 μm to 50 μm, about 1.5 μm to about 50 μm, about 1.5 μm to about 40 μm, or about 1 μm to about 30 μm. Because the base film has a thickness in such a range, a weight of an electrode assembly may be more effectively reduced. The base film may have, for example, a melting point of about 100 °C to about 300 °C, about 100 °C to about 250 °C, or about 100 °C to about 200 °C. Because the base film has a melting point such a range, the base film may be melted and easily coupled to the lead tab in a process of welding the lead tab. Surface treatment such as corona treatment may be performed on the base film to improve adhesion between the base film and the metal layer. The base film may have, for example, a thickness of about 0.01 μm to about 3 μm, about 0.1 μm to about 3 μm, about 0.1 μm to about 2 μm, or about 0.1 μm to about 3 μm. Because the metal layer has a thickness in such a range, the stability of an electrode assembly may be secured while maintaining conductivity. The metal chip may have, for example, a thickness of about 2 μm to about 10 μm, about 2 μm to about 7 μm, or about 4 μm to about 6 μm. Because the metal chip has a thickness in such a range, connection between the metal layer and the lead tab may be more easily performed. Because the positive electrode current collector has such a structure, a weight of the positive electrode may be reduced, thereby improving an energy density of the positive electrode and a lithium battery.

**Separator**

Next, a separator to be inserted between the positive electrode and the negative electrode is prepared.

As the separator, any separator commonly utilized in a lithium battery may be utilized. For example, a separator having low resistance to the movement of ions in an electrolyte and an excellent or suitable electrolyte impregnation

ability may be utilized. For example, the separator may include at least one selected from among a glass fiber, polyester, Teflon, PE, polypropylene (PP), PTFE, and a combination thereof and may be in the form of a nonwoven fabric or a woven fabric. For example, a windable separator including PE, PP, and/or the like may be utilized in a lithium ion battery, and a separator having an excellent or suitable electrolyte impregnation ability may be utilized in a lithium ion polymer battery.

The separator is prepared through the following example method, but one or more embodiments are not necessarily limited to such a method. The method may be adjusted according to required conditions.

First, a polymer resin, a filler, and a solvent are mixed to prepare a separator composition. The separator composition may be applied directly on an electrode and dried to form the separator. In some embodiments, the separator composition may be cast on a support, and then a separator film peeled off of the support may be laminated on an electrode to form the separator.

The polymer resin utilized for preparing the separator is not particularly limited, and any material utilized in a binding material of an electrode plate may be utilized. For example, the polymer resin may include a vinylidene fluoride/hexafluoropropylene copolymer, PVDF, polyacrylonitrile, polymethyl methacrylate, or a mixture thereof.

### Electrolyte

Next, an electrolyte is prepared.

The electrolyte may include, for example, a liquid electrolyte, a solid electrolyte, or a combination thereof.

The electrolyte is, for example, an organic electrolyte. For example, a lithium salt is dissolved in an organic solvent to prepare the organic electrolyte.

Any material may be utilized as long as the material is utilized as an organic solvent in the art. Examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

Any material may be utilized as long as the material is utilized as a lithium salt in the art. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein $1 \leq x \leq 20$ and $1 \leq y \leq 20$), LiCl, LiI, or a mixture thereof.

A concentration of the lithium salt may be, for example, in a range of about 0.1 M to about 5.0 M.

The solid electrolyte may be, for example, an oxide-based solid electrolyte, a sulfide-based solid electrolyte, or a combination thereof.

The solid electrolyte may be, for example, an oxide-based solid electrolyte. The oxide-based solid electrolyte may include at least one selected from among $Li_{1+x+y}Al_xTi_{2-x}Si_yP_{3-y}O_{12}$ (wherein $0<x<2$ and $0 \leq y<3$), $BaTiO_3$, $Pb(Zr,Ti)O_3$ (PZT), $Pb_{1-x}La_xZr_{1-y}Ti_yO_3$ (PLZT) (wherein $O \leq x<1$ and $O \leq y<1$), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al, Ga)_x(Ti, Ge)_{2-x}Si_yP_{3-y}O_{12}$ (wherein $0 \leq x \leq 1$ and $0 \leq y \leq 1$), $Li_xLa_yTiO_3$ (wherein $0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (wherein M=Te, Nb, or Zr, and x is an integer from 1 to 10).

The solid electrolyte is prepared through sintering and/or the like. For example, the oxide-based solid electrolyte may be a garnet-type or kind solid electrode selected from among $Li_7La_3Zr_2O_{12}$ (LLZO) and $Li_{3+x}La_3Zr_{2-a}M_aO_{12}$ (M-doped LLZO) (wherein M=Ga, W, Nb, Ta, or Al, and x is an integer from 1 to 10).

The sulfide-based solid electrolyte may include, for example, lithium sulfide, silicon sulfide, phosphorus sulfide, boron sulfide, or a combination thereof. Sulfide-based solid electrolyte particles may include $Li_2S$, $P_2S_5$, $SiS_2$, $GeS_2$, $B_2S_3$, or a combination thereof. The sulfide-based solid electrolyte particles may include $Li_2S$ or $P_2S_5$. The sulfide-based solid electrolyte particles are (suitable) to have higher lithium ion conductivity than other inorganic compounds. For example, the sulfide-based solid electrolyte may include $Li_2S$ and $P_2S_5$. If (e.g., when) a sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In some embodiments, an inorganic solid electrolyte, which is prepared by adding $Li_3PO_4$, halogen, a halogen compound, $Li_{2+2x}Zn_{1??x}GeO_4$ ("LISICON") (wherein $0 \leq x<1$), $Li_{3+y}PO_{4-x}N_x$ (LIPON) (wherein $0<x<4$ and $0<y<3$), $Li_{3.25}Ge_{0.25}P_{0.75}S_4$ ("Thio LISICON"), $Li_2O$-$Al_2O_3$-$TiO_2$-$P_2O_5$ ("LATP"), and/or the like to $Li_2S$-$P_2S_5$, $SiS_2$, $GeS_2$, $B_2S_3$, or a combination, may be utilized as the sulfide-based solid electrolyte. Non-limiting examples of the sulfide-based solid electrolyte material include $Li_2S$-$P_2S_5$; $Li_2S$-$P_2S_5$-LiX (wherein X is an halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$ -$P_2S_5$-$Z_mS_n$ (wherein $0<m<10$, $0<n<10$, and Z=Ge, Zn, or Ga), $Li_2S$-$GeS_2$; $Li_2S$-$SiS_2$-$Li_3PO_4$, and $Li_2S$-$SiS_2$-$Li_pMO_q$ ($0<p<10$, $0<q<10$, and M=P, Si, Ge, B, Al, Ga, or In).

In this regard, the sulfide-based solid electrolyte material may be prepared by treating a raw starting material (for example, $Li_2S$ or $P_2S_5$) of the sulfide-based solid electrolyte material through melt quenching, mechanical milling, and/or the like. Also, a calcination process may be performed after the treating. The sulfide-based solid electrolyte may be in an amorphous state, a crystalline state, or a mixture state thereof. The polymer solid electrolyte may include, for example, a mixture of a lithium salt and a polymer or a polymer having an ion-conductive functional group. The polymer solid electrolyte may be, for example, a polymer electrolyte in a solid state at a temperature of about 25 °C and a pressure of about 1 atm. The polymer solid electrolyte may not include (e.g., may exclude), for example, a (e.g., any) liquid. The polymer solid electrolyte may include, for example, polyethylene oxide (PEO), polyvinylidene fluoride (PVDF), vinylidene fluoride-hexafluoropropylene (PVDF-HFP), a poly(styrene-b-ethylene oxide) block or reduce copolymer (PS-PEO), poly(styrene-butadiene), poly(styrene-isoprene-styrene), an poly(styrene-b-divinylbenzene) block or reduce copolymer, a polystyrene-ethylene oxide-styrene) block or reduce copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ketone), SPEEK), sulfonated poly(arylene ether ketone sulfone) (SPAEKKS), sulfonated poly(aryl ether ketone (SPAEK), poly[bis(benzimidazobenzisoquinolinones)] (SPBIBI), poly(styrene sulfonate), (PSS), lithium 9,10-diphenylanthracene-2-sulfonate, DPASLi+, or a combination thereof, but one or more embodiments are not limited thereto. Any material utilized as a polymer electrolyte in the art may be utilized. As the lithium salt, any material usable as a lithium salt in the art may be utilized. The lithium salt may include, for example, $LiPF_6$, $LiBF_4$, $LiSbF_6$, $LiAsF_6$, $LiC10_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each from 1 to 10). 20), LiCl, LiI, or a mixture thereof.

The polymer included in the polymer solid electrolyte may be, for example, a compound including 10 or more, 20 or more, 50 or more, or 100 or more repeating units. The polymer included in the polymer solid electrolyte may have, for example, a weight average molecular weight of 1,000 Dalton or more, 10,000 Dalton or more, 100,000 Dalton or more, or 1,000,000 Dalton or more.

A gel electrolyte may be, for example, a polymer gel electrolyte. The gel electrolyte may have a gel state without including, for example, a polymer.

The polymer gel electrolyte may include, for example, a liquid electrolyte and a polymer or may include an organic solvent and a polymer having an ion-conductive functional group. The polymer gel electrolyte may be, for example, a polymer gel electrolyte in a gel state at a temperature of about 25 °C and a pressure of about 1 atm. The polymer gel electrolyte may have, for example, a gel state without including a liquid. The liquid electrolyte utilized in the polymer gel electrolyte may include, for example, a mixture of an ionic liquid, a lithium salt, and an organic solvent, a mixture of a lithium salt and an organic solvent, a mixture of an ionic liquid and an organic solvent, or a mixture of a lithium salt, an ionic liquid, and an organic solvent. The polymer utilized in the polymer gel electrolyte may be selected from polymers utilized in the solid polymer electrolyte. The organic solvent may be selected from organic solvents utilized in the liquid electrolyte. The lithium salt may be selected from lithium salts utilized in the polymer solid electrolyte. The ionic liquid may have a melting point room temperature, may include only ions, and may refer to a salt in a liquid state at room temperature or a molten salt at room temperature. The ionic liquid may include, for example, at least one selected from among compounds including a) at least one cation selected from among ammonium-based, pyrrolidinium-based, pyridinium-based, pyrimidinium-based, imidazolium-based, piperidinium-based, pyrazolium-based, oxazolium-based, pyridazinium-based , phosphonium-based, sulfonium-based, triazolium-based cations, and a mixture thereof, and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, Cl-, Br, $I^-$ , $BF_4^-$ , $SO_4^-$; $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$.

For example, the polymer solid electrolyte may be impregnated in a liquid electrolyte in a secondary battery to form a polymer gel electrolyte. The polymer gel electrolyte may further include inorganic particles. The polymer included in the polymer gel electrolyte may be, for example, a compound including 10 or more, 20 or more, 50 or more, or 100 or more repeating units. The polymer included in the polymer gel electrolyte may have, for example, a weight average molecular weight of 500 Dalton or more, 1,000 Dalton or more, 10,000 Dalton or more, 100,000 Dalton or more, or 1,000,000 Dalton or more.

**Lithium Battery**

Referring to FIG. 5, a lithium battery 1 according to some embodiments may include a positive electrode 3, the described negative electrode 2, and a separator 4. The positive electrode 3, the negative electrode 2, and the separator 4 may be wound or folded to form a battery structure 7. The formed battery structure 7 may be accommodated in a battery case 5. An organic electrolyte may be injected into the battery case 5, and the battery case 5 may be sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, and/or the like.

Referring to FIG. 6, a lithium battery 1 according to some embodiments may include a positive electrode 3, the described negative electrode 2, and a separator 4. A separator 4 may be provided between the positive electrode 3 and the negative electrode 2, and the positive electrode 3, the negative electrode 2, and the separator 4 may be wound or folded to form a battery structure 7. The formed battery structure 7 may be accommodated in a battery case 5. The lithium battery 1 may include an electrode tab 8 serving as an electrical path for guiding a current formed in the battery structure 7 to the outside. An organic electrolyte may be injected into the battery case 5, and the battery case 5 may be sealed to complete the lithium battery 1. The battery case 5 may have a prismatic shape, but one or more embodiments are not necessarily limited to such a shape. For example, the battery case 5 may have a cylindrical shape, a thin film shape, and/or the like.

Referring to FIG. 7, a lithium battery 1 according to some embodiments may include a positive electrode 3, the described negative electrode 2, and a separator 4. The separator 4 may be provided between the positive electrode 3 and the negative electrode 2 to form a battery structure 7. The battery structure 7 may be stacked in a bi-cell structure and then accommodated in a battery case 5. The lithium battery 1 may include an electrode tab 8 serving as an electrical path for guiding a current formed in the battery structure 7 to the outside. An organic electrolyte may be injected into the battery case 5, and the battery case 5 may be sealed to complete the lithium battery 1. The battery case 5 may have a prismatic shape, but one or more embodiments are not necessarily limited to such a shape. For example, the battery case 5 may have a cylindrical shape, a thin film shape, and/or the like.

A pouch-type or kind lithium battery corresponds to a case in which a pouch is utilized as a battery case in the lithium batteries of FIGS. 5 to 7. The pouch-type or kind lithium battery may include one or more battery structures. A separator may be provided between a positive electrode and a negative electrode to form the battery structure. After the battery structure is stacked in a bi-cell structure, the battery structure may be impregnated in an organic electrolyte, accommodated in a pouch, and sealed to complete the pouch-type or kind lithium battery. For example, although not shown in the drawing, the described positive electrode, negative electrode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

A lithium battery may have excellent or suitable lifespan characteristics and high rate characteristics and thus may be utilized, for example, in electric vehicles (EVs). For example, the lithium battery may be utilized in hybrid vehicles such as plug-in hybrid electric vehicles (PHEVs). In some embodiments, the lithium battery may be utilized in fields in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptop computers, smartphones, electric vehicles, and/or the like. A battery module may include, for example, a plurality of batteries and a frame for holding the plurality of batteries. A battery pack may include, for example, a plurality of battery modules and a bus bar for connecting the plurality of battery modules. The battery module and/or the battery pack may further include a cooling device. A plurality of battery packs may be controlled or selected by a battery management system. The battery management system may include a battery pack and a battery controller connected to the battery pack.

The described negative electrode may be applied to a lithium metal battery including a solid electrolyte. A lithium metal battery including the described negative electrode and solid electrolyte will be described in more detail.

**All-Solid Lithium Metal Battery**

A lithium metal battery may be, for example, an all-solid (e.g., solid-state) lithium metal battery including a solid electrolyte. The all-solid lithium metal battery may include the described negative electrode and thus may have improved capacity and excellent or suitable lifespan characteristics at the same time.

For example, the all-solid lithium battery may be manufactured through the following example method, but one or more embodiments are not necessarily limited to such a method. The method may be adjusted according to required conditions.

Referring to FIGS. 8 and 9, an all-solid lithium metal battery 1 may include a positive electrode 10, the described negative electrode 20, and a solid electrolyte layer 30 provided between the positive electrode 10 and the negative electrode 20. The solid electrolyte layer 30 may include, for example, an inorganic solid electrolyte. The solid electrolyte layer 30 may include, for example, a sulfide-based solid electrolyte or an oxide-based solid electrolyte.

**Negative Electrode**

The described negative electrode is prepared.

Positive Electrode

Referring to FIGS. 8 and 9, the positive electrode 10 may include a positive electrode current collector 11 and a positive electrode active material layer 12 provided on the positive electrode current collector 11. The positive electrode active material layer 12 may include a positive electrode active material. For the positive electrode active material, a section of the described lithium metal battery is referred to.

The positive electrode active material layer 12 may further include a solid electrolyte in addition to the positive electrode active material. The solid electrolyte included in the positive electrode 10 may be the same as or different from the solid electrolyte included in the solid electrolyte layer 30. For details of the solid electrolyte included in the positive electrode 10, a section of the solid electrolyte layer 30 is referred to.

The solid electrolyte utilized in the positive electrode active material layer 12 may have a D50 average particle diameter less than that of the solid electrolyte utilized in the solid electrolyte layer 30. For example, the D50 average particle diameter of the solid electrolyte utilized in the positive electrode active material layer 12 may be at most 90 % or less, at most 80 % or less, at most 70 % or less, at most 60 % or less, at most 50 % or less, at most 40 % or less, at most 30 % or less, or at most 20 % or less of the D50 average particle diameter of the solid electrolyte utilized in the solid electrolyte layer 30. The D50 average particle diameter of the solid electrolyte utilized in the positive electrode active material layer 12 may be, for example, in a range of about 0.1 μm to about 2 μm, about 0.2 μm to about 1.5 μm, or about 0.3 μm to about 1.0 μm.

A content (e.g., amount) of the solid electrolyte included in the positive electrode active material layer 12 may be in a range of about 1 wt% to about 15 wt%, about 5 wt% to about 15 wt%, or about 8.0 wt% to about 12.0 wt% with respect to the total weight of the positive electrode active material layer 12. The positive electrode active material layer 12 may include a binder. The binder may include, for example, SBR, polytetrafluoroethylene, PVDF, PE, and/or the like, but one or more embodiments are not necessarily limited thereto. Any material usable as a binder in the art may be utilized. A content (e.g., amount) of the binder included in the positive electrode active material layer 12 may be, for example, in a range of 0.1 wt% to about 5 wt%, about 0.5 wt% to about 3 wt%, or about 1.0 wt% to about 2.0 wt% with respect to the total weight of the positive electrode active material layer 12.

The positive electrode active material layer 12 may include a conductive material. The conductive material may be, for example, a carbon-based conductive material or a metal-based conductive material. The conductive material may include, for example, graphite, CB, acetylene black, KB, a carbon fiber, a carbon tube, a metal powder, and/or the like, but one or more embodiments are not necessarily limited thereto. Any material usable as a conductive material in the art may be utilized. A content (e.g., amount) of the conductive material included in the positive electrode active material layer 12 may be, for example, in a range of about 0.1 wt% to about 10 wt%, about 0.5 wt% to about 5 wt%, or about 1.0 wt% to about 4.0 wt% with respect to the total weight of the positive electrode active material layer 12. In addition to the described positive electrode active material, solid electrolyte, binder, and conductive material, the positive electrode active material layer 12 may further include, for example, additives such as a filler, a coating agent, a dispersant, and an ion-conductive adjuvant.

The positive electrode current collector 11 may be formed in the form of a plate, a foil, and/or the like made of, for example, aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or an alloy thereof. The positive electrode current collector 11 may not be provided. The positive electrode current collector 11 may further include a carbon layer provided on one surface or both (e.g., opposite) surfaces of a metal substrate. Because the carbon layer is additionally provided on the metal substrate, a metal of the metal substrate may be prevented or reduced from being corroded by the solid electrolyte included in a positive electrode layer, and interface resistance between the positive electrode active material layer 12 and the positive electrode current collector 11 may be reduced. The carbon layer may have, for example, a thickness of about 1 μm to about 5 μm, about 1 μm to about 4 μm, or about 1 μm to about 3 μm. If (e.g., when) the carbon layer is excessively thin, it may be difficult to completely block or reduce contact between the metal substrate and the solid electrolyte. If (e.g., when) the carbon layer is excessively thick, an energy density of an all-solid secondary battery may be decreases. The carbon layer may include amorphous carbon, crystalline carbon, and/or the like. The positive electrode current collector 11 including the metal substrate and optionally including the carbon layer may have, for example, a thickness of about 10 μm to about 50 μm, about 10 μm to about 40 μm, or about 10 μm to about 30 μm, but one or more embodiments are not necessarily limited thereto. The thickness of the positive electrode current collector 11 may be selected according to required characteristics of an all-solid lithium battery.

In some embodiments, in addition to the positive electrode current collector 11 and the positive electrode active material layer 12 provided on the positive electrode current collector 11, the positive electrode 10 may further include an inactive member provided on one side surface of the positive electrode active material layer 12. An area of the positive electrode active material layer 12 may be less than an area of the solid electrolyte layer 30 in contact with the positive electrode active material layer 12. The inactive member 40 may be provided around (e.g., surrounding) the side surface of the positive electrode active material layer 12 to correct an area error between the positive electrode active material

layer 12 and the solid electrolyte layer 30. The inactive member is a member that does not include an electrochemically active material, for example, an electrode active material. The electrode active material is a material that absorbs/desorbs lithium. The inactive member is a member made of a material utilized in the art other than an electrode active material. The inactive member may surround the side surface of the positive electrode active material layer 12 and may be in contact with the solid electrolyte layer 30. Because the inactive member surrounds the side surface of the positive electrode active material layer 12 and is in contact with the solid electrolyte layer 30, it is possible to effectively suppress or reduce cracks of the solid electrolyte layer 30 caused by a pressure difference during a pressing process in the solid electrolyte layer 30 that is not in contact with the positive electrode active material layer 12. A difference between the area of the positive electrode active material layer 12 and the area of the solid electrolyte layer 30 may be corrected due to an area of the inactive member 40, thereby effectively suppressing cracks of the solid electrolyte layer 30 caused by a pressure difference during a pressing process. The inactive member 40 may be provided between the positive electrode current collector 11 and the solid electrolyte layer 30 facing each other. The inactive member 40 may serve as a filler filling a space between the positive electrode current collector 11 and the solid electrolyte layer 30 facing each other. The inactive member 40 may include at least one selected from a lithium ion insulator and a lithium ion conductor. The inactive member 40 may be an electron insulator. For example, the inactive member 40 may not be an electron conductor. The inactive member 40 may include an organic material, an inorganic material, or an organic-inorganic composite material. The organic material may be, for example, a polymer. The inorganic material may be, for example, ceramic such as a metal oxide. The organic-inorganic composite material may be a composite of a polymer and a metal oxide. For example, the inactive member 40 may include at least one selected from among an insulating polymer, an ion-conductive polymer, an insulating inorganic material, an oxide-based solid electrolyte, and a sulfide-based solid electrolyte. The inactive member may include, for example, an olefin-based polymer such as PP or PE. The inactive member may be, for example, a gasket. A thickness of the inactive member 40 may be the same (substantially the same) as or similar to a thickness of the positive electrode active material layer 12.

## Solid Electrolyte Layer

Referring to FIGS. 8 and 9, the solid electrolyte layer 30 may be provided between the positive electrode 10 and the negative electrode 20 and may include a sulfide-based solid electrolyte.

The sulfide-based solid electrolyte may include, for example, at least one selected from among $Li_2S$-$P_2S_5$, $Li_2S$-$P_2S_5$-LiX (wherein X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (wherein m and n are each a positive number and Z is one selected from among Ge, Zn, and Ga), $Li_2S$-$GeS_2$, $Li_2S$-$SiS_2$-$Li_3PO_4$, $Li_2S$-$SiS_2$-$Li_pMO_q$ (wherein p and q are each a positive number and M is one selected from among P, Si, Ge, B, Al, Ga, and In, $Li_{7-x}PS_{6-x}Cl_x$ (wherein $0 \leq x \leq 2$), $Li_{7-x}PS_{6-x}Br_x$ (wherein $0 \leq x \leq 2$), and $Li_{7-x}PS_{6-x}I_x$ (wherein $0 \leq x \leq 2$).
The sulfide-based solid electrolyte may be prepared by treating a starting material such as $Li_2S$ or $P_2S_5$ through melt quenching or mechanical milling. In some embodiments, after such treating, heat treatment may be performed. The solid electrolyte may be in an amorphous state, a crystalline state, or a mixture state thereof. In some embodiments, the solid electrolyte may be, for example, a material that includes at least sulfur (S), phosphorus (P), and lithium (Li) as constituent elements among the described materials of the sulfide-based solid electrolyte. For example, the solid electrolyte may be a material including $Li_2S$-$P_2S_5$. If (e.g., when) a material including $Li_2S$-$P_2S_5$ is utilized as a sulfide-based solid electrolyte material for forming a solid electrolyte, a mixing molar ratio of $Li_2S$ to $P_2S_5$, for example, $Li_2S$:$P_2S_5$ may be in a range of about 50:50 to about 90:10.

The sulfide-based solid electrolyte may include, for example, an argyrodite-type or kind solid electrolyte represented by Formula 1.

Formula 1 $$Li^{+}_{12-n-x}A^{n+}X^{2-}_{6-x}Y^{-}_{x}$$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, $1 \leq n \leq 5$, and $0 \leq x \leq 2$. The sulfide-based solid electrolyte may be, for example, an argyrodite-type or kind compound including at least one selected from among $Li_{7-x}PS_{6-x}Cl_x$ (wherein $0 \leq x \leq 2$), $Li_{7-x}PS_{6-x}Br_x$ (wherein $0 \leq x \leq 2$), and $Li_{7-x}PS_{6-x}I_x$ (wherein $0 \leq x \leq 2$). The sulfide-based solid electrolyte may be, for example, an argyrodite-type or kind compound including at least one selected from among $Li_6PS_5Cl$, $Li_6PS_5Br$, and $Li_6PS_5I$.

The argyrodite-type or kind solid electrolyte may have a density of about 1.5 gram per cubic centimeter (g/cc) to about 2.0 g/cc. Because the argyrodite-type or kind solid electrolyte has a density of 1.5 g/cc or more, it is possible to reduce internal resistance of an all-solid secondary battery and effectively suppress or reduce Li from penetrating the solid electrolyte layer 30.

An elastic modulus of the sulfide-based solid electrolyte, that is, a Young's modulus, may be, for example, at most 35 GPa or less, at most 30 GPa or less, at most 27 GPa or less, at most 25 GPa or less, or at most 23 GPa or

less. The elastic modulus of the sulfide-based solid electrolyte, that is, the Young's modulus, may be, for example, in a range of about 10 GPa to about 35 GPa, about 10 GPa to about 30 GPa, about 10 GPa to about 27 GPa, about 10 GPa to about 25 GPa, or about 10 GPa to about 23 GPa. Because the sulfide-based solid electrolyte has an elastic modulus in such a range, a temperature and/or pressure required for sintering is reduced, and thus sintering of the solid electrolyte may be more easily performed.

The solid electrolyte utilized in the solid electrolyte layer 30 may have, for example, a D50 average particle diameter of about 1 $\mu$m to about 10 $\mu$m, about 1.5 $\mu$m to about 7 $\mu$m, or about 2 $\mu$m to about 5 $\mu$m.

A content (e.g., amount) of the sulfide-based solid electrolyte included in the solid electrolyte layer 30 may be, for example, in a range of about 97 wt% to about 100 wt%, about 98 wt% to about 99.9 wt%, or about 98.5 wt% to about 99.0 wt% with respect to the total weight of the solid electrolyte layer 30.

The solid electrolyte layer 30 may further include, for example, a binder. The binders included in the solid electrolyte layer 30 may include, for example, SBR, polytetrafluoroethylene, PVDF, PE, and/or the like, but one or more embodiments are not limited thereto. Any material utilized as a binder in the art may be utilized. The binder of the solid electrolyte layer 30 may be the same as or different from the binders included in the positive electrode active material layer 12 and the negative electrode active material layer 23.

A content (e.g., amount) of the binder included in the solid electrolyte layer 30 may be, for example, in a range of about 0.1 wt% to about 3 wt%, about 0.5 wt% to about 2 wt%, or about 1.0 wt% to about 2.0 wt% with respect to the total weight of the solid electrolyte layer 30.

Referring to FIGS. 8 and 9, the all-solid lithium metal battery 1 may include the solid electrolyte layer 30, the positive electrode 10 provided on one surface of the solid electrolyte layer 30, and the negative electrode 20 provided on the other surface of the solid electrolyte layer 30. The positive electrode 10 may include the positive electrode active material layer 12 in contact with the solid electrolyte layer 30 and the positive electrode current collector 11 in contact with the positive electrode active material layer 12. The negative electrode layer 20 includes a protective layer 23, the protective layer 23 in contact with the solid electrolyte layer 30 and the protective 23 in contact with the negative electrode active material layer 22. In some embodiments, the negative electrode 20 may include a negative electrode active material layer 22 and an protective layer 23, the protective layer 23 in contact with the solid electrolyte layer 30 and a negative electrode current collector 21 in contact with the negative electrode active material layer 22. In the all-solid lithium metal battery 1, for example, the positive electrode active material layer 12 and the protective layer 23 may be respectively provided on both (e.g., opposite) surfaces of the solid electrolyte layer 30, and the positive electrode current collector 11 and the negative electrode current collector 21 may be respectively provided on the positive electrode active material layer 12 and the protective layer 22 to complete the all-solid lithium metal battery 1. For example, the all-solid lithium metal battery 1a may be prepared by disposing the positive electrode active material layer 12 and the protective layer 23/the negative electrode active material layer 22 on both (e.g., opposite) surfaces (e.g., sides) of the solid electrolyte layer 30 and disposing the positive electrode current collector 11 and the negative electrode current collector 21 on the positive electrode active material layer 12 and the negative electrode active material layer 22, respectively. In some embodiments, the protective 22, the solid electrolyte layer 30, the positive electrode active material layer 12, and the positive electrode current collector 11 may be sequentially stacked on the negative electrode current collector 21 to complete the all-solid lithium metal battery 1. In some embodiments, an all-solid lithium metal battery 1a may be prepared by sequentially stacking an negative electrode active material layer 22, the protective layer 23, the solid electrolyte layer 30, the positive electrode active material layer 12, and the positive electrode current collector 11 on the negative electrode current collector 21.

**Method of Preparing Negative Electrode**

A method of preparing a negative electrode according to another embodiment may include providing a negative electrode current collector, providing a second protective layer on the negative electrode current collector, and providing a first protective layer on the second protective layer, wherein the first protective layer includes porous nanostructure particles, and the second protective layer includes polar inorganic particles. A lithium metal battery including a negative electrode prepared through such a method may have improved cycle characteristics.

First, the negative electrode current collector is provided. For the negative electrode current collector, a section of the described negative electrode portion is referred to. For example, a copper foil is provided as the negative electrode current collector.

Next, the second protective layer is provided on the negative electrode current collector. For example, polar inorganic particles, a second binder, and a solvent are mixed to prepare a second slurry, and then the second slurry is applied on the negative electrode current collector and dried to provide the second protective layer. A coating method is not particularly limited, and coating may be performed utilizing a doctor blade and/or the like. For the polar inorganic particles and the second binder, a section of the described negative electrode is referred to. The solvent may be an organic solvent. The solvent may include, for example, N,N-dimethylacetamide, N-methylpyrrolidone (NMP), and/or the

like, but one or more embodiments are not necessarily limited thereto. Any material utilized as a solvent in the art may be utilized.

Next, the first protective layer is provided on the second protective layer. For example, porous nanostructure particles, a first binder, and a solvent are mixed to prepare a first slurry, and then the first slurry is applied on the second protective layer and dried to provide the first protective layer. A coating method is not particularly limited, and coating may be performed utilizing a doctor blade and/or the like. For the porous nanostructure particles and the first binder, a section of the described negative electrode is referred to. The solvent may be an organic solvent. The solvent may include, for example, N,N-dimethylacetamide, NMP, and/or the like, but one or more embodiments are not necessarily limited thereto. Any material utilized as a solvent in the art may be utilized.

The porous nanostructure particles may include, for example, an MOF. The MOF may be obtained commercially or directly synthesized.

The MOF may be synthesized through a suitable method. A method of synthesizing an MOF may include, for example, a solution method, a hydrothermal method, a solid phase synthesis method (mechanochemical method), a microwave method, an ultrasonic method, and/or the like, but one or more embodiments are not limited thereto. For the MOF, for example, a complex or a metal-containing secondary structural unit (SBU) having metal ions is prepared as a metal source. A compound, which includes an organic ligand having two or more coordinating functional groups, is prepared as an organic ligand source. The metal source and the organic ligand source may be introduced into a solvent, mixed, and then stirred to prepare the MOF. In such mixing and stirring processes, the MOF is prepared.

The MOF may include one or more metal clusters and an organic ligand connecting the metal clusters. The metal cluster may include, for example, one or more metal ions. The metal cluster may be represented by, for example, MaXb, wherein a is 1 to 10, and b is selected to balance charges of the cluster. For example, X may be $O^{2-}$, $N^{3-}$, $S^{2-}$, or a combination thereof. M may be, for example, $Li^+$, $K^+$, $Na^+$, $Cs^+$, $Mg^{2+}$, $Ca^{2+}$, $Sr^{2+}$, $Ba^{2+}$, $V^{2+}$, $V^{3+}$, $V^{4+}$, $V^{5+}$, $Mn^{2+}$, $Re^{2+}$, $Fe^{2+}$, $Fe^{3+}$, $Ru^{3+}$, $Ru^{2+}$, $Os^{2+}$, $Co^{2+}$, $Rh^{2+}$, $Ir^{2+}$, $Ni^{2+}$, $Pd^{2+}$, $Pt^{2+}$, $Cu^{2+}$, $Zn^{2+}$, $Cd^{2+}$, $Hg^{2+}$, $Si^{2+}$, $Ge^{2+}$, $Sn^{2+}$, $Pb^{2+}$, or a combination thereof. For example, the organic ligand having two or more coordinating functional groups may be selected from among ligands represented by the following Formulas 1a to 1k.

Formula 1a

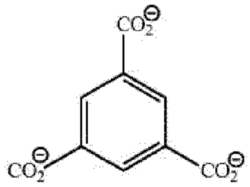

Formula 1b

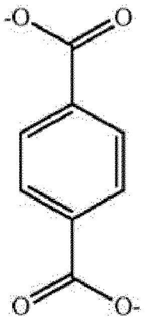

Formula 1c

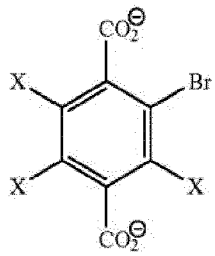

Formula 1d

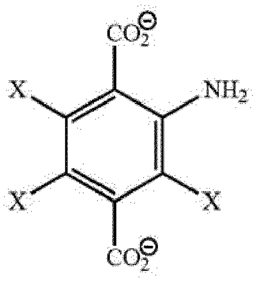

Formula 1e

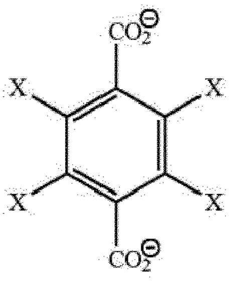

Formula 1f

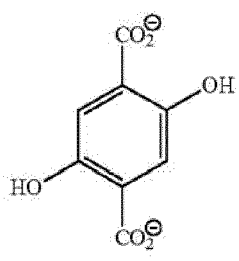

Formula 1g

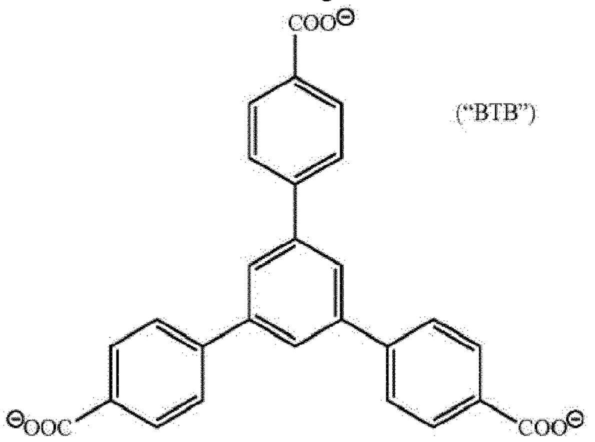

("BTB")

Formula 1i

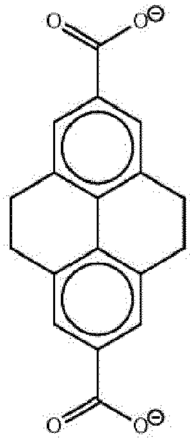

("HPDC")

Formula 1j

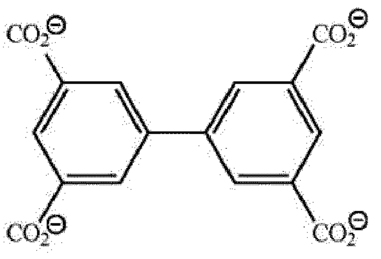

(BPTC)

Formula 1k

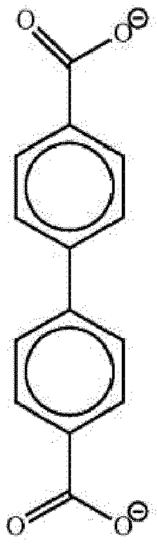

("BPDC")

In the above formulas, X may be at least one selected from among hydrogen, -NHR, $-N(R)_2$, halide, $C_{1-10}$ alkyl, $C_{6-18}$ aryl or $C_{6-18}$ aralkyl, $-NH_2$, alkenyl, alkynyl, -O(alkyl), -NH (aryl), cycloalkyl, cycloalkenyl, cycloalkynyl, -(CO)R, $-(SO_2)R$,$-(CO_2)R$, -SH, -S (alkyl), $-SO_3H$, $-SO^{3-}M^+$, -COOH, $-COO^-M^+$, $-PO_3H_{2-}$, $-PO_3H^-M^+$, $-PO_3^{2-}$ $M^{2+}$ or $-PO_3^{2-}M^{2+}$, $-NO_2$, $-CO_2H$, silyl derivatives, borane derivatives, ferrocenes, and other metallocenes, M may be a metal atom, and R may be $C_{1-10}$ alkyl.

The method of preparing a negative electrode may further include providing a negative electrode active material layer between the second protective layer and the negative electrode current collector. The negative electrode active material layer may include, for example, a lithium metal and/or a lithium alloy.

A method of providing the negative electrode active material layer between the second protective layer and the negative electrode current collector is not particularly limited. For example, before the second protective layer is provided on the negative electrode current collector, the negative electrode active material layer may be provided on the negative electrode current collector. A method of arranging the negative electrode active material layer on the negative electrode current collector is not particularly limited. For example, a lithium metal layer may be provided on a metal substrate through sputtering and/or the like. In some embodiments, for example, a lithium foil may be provided on a metal substrate and rolled to prepare a copper foil/lithium foil stack. In some embodiments, a stack in which a lithium metal layer is stacked on a copper foil may be commercially obtained and utilized. In some embodiments, a composition including a lithium powder and a binder may be applied on a metal substrate and dried to prepare a stack. For the lithium powder and the binder, a section of the described negative electrode is referred to. In some embodiments, after a negative electrode including a negative electrode current collector and a protective layer is prepared, the negative electrode active material layer may be provided between the negative electrode current collector and the protective layer

through charging. The negative electrode active material layer may be, for example, a plated lithium layer.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in more detail through the following Examples and Comparative Examples. However, Examples are for illustrative purposes only, and the scope of the present disclosure is not limited by Examples.

## EXAMPLES

### Preparation of Porous Nanostructure Particles

### Preparation Example 1

10 mL (0.064 M) of $Cu(NO_3)_2$•$2.5H_2O$ (99.5 %) (manufactured by Sigma-Aldrich Co., LLC) and 10 mL (0.062 M) of a trimesic acid (99.5 %, BTC) (manufactured by Sigma-Aldrich Co., LLC) were introduced into 10 mL of ethanol (99.95 %, absolute ethanol) (manufactured by Sigma-Aldrich Co., LLC) and mixed and stirred at room temperature for 20 minutes to prepare a solution. An obtained mixture was collected through centrifugation (at 40,000 rpm for 10 minutes), cleaned several times with ethanol, and dispersed through ultra-sonication (for 5 minutes). An obtained blue centrifugation product was collected and vacuum-dried at a temperature of 70 °C for 2 hours to prepare solid Cu-BTC (HKUST-1). The Cu-BTC had a particle diameter of 5 μm to 10 μm. A size of nanopores included in the Cu-BTC was 0.8 nm. The nanopores were regularly and periodically aligned in the Cu-BTC. Negative ions were provided on surfaces of nanopores, and thus the surfaces of the nanopores were substantially negatively charged. For example, because the surfaces of the nanopores are substantially formed of negative ions, the surfaces of the nanopores are anionic. The Cu-BTC is an MOF.

### Manufacturing of Negative Electrode and Lithium Metal Battery

### Example 1: Negative electrode of Cu substrate/LiF second protective layer/MOF first protective layer, MOF 70wt%

### Preparation of Negative Electrode

Cu-BTC particles prepared in Preparation Example 1 and a PVDF powder (with an weight average molecular weight (Mw) of 534,000 measured through GPC) (manufactured by Sigma-Aldrich Co., LLC) as a first binder were introduced into N,N-dimethylacetamide (99 %, DMAc manufactured by Sigma-Aldrich Co., LLC) in a weight ratio of 70:30 and stirred overnight at a temperature of 60 °C to prepare a first composition.

An LiF powder (manufactured by Sigma-Aldrich Co., LLC) was pulverized at 760 rpm for 12 hours utilizing a planetary ball mill (Pulverisette 5) to prepare LiF nanoparticles. The LiF nanoparticles had a particle diameter of 10 nm to 15 nm.

LiF nanoparticles and a PVDF powder (with an weight average molecular weight (Mw) of 534,000 measured through GPC) (manufactured by Sigma-Aldrich Co., LLC) as a second binder were introduced into N,N-dimethylacetamide (99 %, DMAc manufactured by Sigma-Aldrich Co., LLC) in a weight ratio of 30:70 and stirred overnight at a temperature of 60 °C to prepare a second composition.

The second composition was applied on a copper (Cu) current collector having a thickness of 20 μm utilizing a doctor blade, and then a solvent was removed at a temperature of 65 °C for 6 hours to prepare a second protective layer.

The first composition was applied on the second protective layer utilizing a doctor blade, and a solvent was removed at a temperature of 65 °C for 6 hours to prepare a first protective layer. A protective layer, which had a double layer structure including the first protective layer and the second protective layer, was prepared.

A negative electrode having a negative electrode current collector/second protective layer/second protective layer structure was prepared.

A scanning electron microscope image of a cross section of the prepared negative electrode is shown in FIG. 10.

As shown in FIG. 10, it was confirmed that a protective layer having a double layer structure in which the second protective layer was provided on the copper current collector and the first protective layer was provided on the second protective layer was provided. Protrusions and depressions were formed on a surface of the first protective layer due to the Cu-BTC particles.
The first protective layer had a thickness of 7.34 μm, the second protective layer had a thickness of 6.55 μm, and the protective layer had a total thickness of 13.89 μm.

### Manufacturing of Coin Cell

A lithium foil having a thickness of 20 μm was utilized as a counter electrode, a polypropylene separator (Celgard 3510) was placed between the counter electrode and a negative electrode, and an electrolyte was injected to manufacture a coin cell.
As the electrolyte, a solution in which 1.15 M $LiPF_6$ was dissolved in EC+ethyl methyl carbonate (EMC)+DMC (volume ratio of 2:4:4) was utilized.

### Example 2: Negative electrode of Cu substrate/LiF second protective layer/MOF first protective layer, 50 wt% of MOF

A negative electrode and a coin cell were manufactured in substantially the same manner as in Example 1, except that a content (e.g., amount) of Cu-BTC included in a first protective layer was changed into 50 wt%.

### Example 3: Negative electrode of Cu substrate/LiF second protective layer/MOF second protective layer, 10 wt% of LiF

A negative electrode and a coin cell were manufactured in substantially the same manner as in Example 1, except that a content (e.g., amount) of LiF included in a second protective layer was changed into 10 wt%.

### Comparative Example 1: Bare Cu-based negative electrode

A negative electrode and a coin cell were manufactured in substantially the same manner as in Example 1, except that a copper current collector was utilized as a negative electrode without any change.

### Comparative Example 2: Negative electrode of Cu substrate/NiF second protective layer (first protective layer being omitted)

A negative electrode and a coin cell were manufactured in substantially the same manner as in Example 1, except that an operation of arranging a first protective layer was omitted.

### Comparative Example 3: Negative electrode of Cu substrate/MOF first protective layer (second protective layer being omitted)

A negative electrode and a coin cell were manufactured in substantially the same manner as in Example 1, except that an operation of arranging a second protective layer was omitted.

### Evaluation Example 1: Charging/Discharging Test

Lithium batteries manufactured in Examples 1 to 3 and Comparative Examples 1 to 3 were charged at a temperature of 25 °C at a constant current of 0.1 milliampere per square centimeter ($mA/cm^2$) for 5 hours. Subsequently, during discharging, the lithium batteries were discharged at a constant current of 0.1 $mA/cm^2$ until a voltage reached 1.0 V (vs. Li).
Such a cycle was repeated under the same conditions up to a $500^{th}$ cycle.
The lithium batteries were rested for 10 minutes after every charging/discharging cycle. Some of room temperature charging/discharging test results are shown in FIG. 11 and Table 1. Charge/discharge efficiency is defined by Equation 1.
The number of cycles in which charge/discharge efficiency is decreased to 80 % or less is shown in Table 1.

Equation 1

$$\text{charge/discharge efficiency [\%]} = [\text{discharge capacity in } N^{th} \text{ cycle/charge capacity in } N^{th} \text{ cycle}] \times 100$$

Table 1

| | First protective layer/second protective layer | The number of cycles [times] in which charge/discharge efficiency is decreased to 80 % or less |
|---|---|---|
| Example 1 | 70 wt% of Cu-BTC/30 wt% of LiF | 461 |
| Example 2 | 50 wt% of Cu-BTC/30 wt% of LiF | 422 |
| Example 3 | 70 wt% of Cu-BTC/10 wt% of LiF | 393 |
| Comparative Example 1 | (bare Cu) | 152 |
| Comparative Example 2 | 30 wt% of LiF alone | 282 |
| Comparative Example 3 | 70 wt% of Cu-BTC alone | 225 |

As shown in FIG. 11 and Table 1, the lithium batteries of Examples 1 to 3 had improved lifespan characteristics as compared with the lithium batteries of Comparative Examples 1 to 3.

The improved lifespan characteristics of the lithium batteries of Examples 1 to 3 were determined to be due to side reactions caused by the decomposition of a solvent on a surface of a negative electrode being suppressed or reduced and a local current density imbalance being suppressed or reduced due to a double layer structure of a first protective layer including Cu-BTC and a second protective layer including LiF.

In the lithium batteries of Comparative Examples 1 to 3, it was determined that a protective layer did not effectively suppress or reduce side reactions with a solvent and/or a local current density imbalance.

While embodiments have been described in more detail with reference to the accompanying drawings, the present disclosure is not limited to the embodiments. It is obvious to those skilled in the art to which the present disclosure belongs that one or more suitable changes and modifications are conceivable within the scope of the technical idea described in the claims, and those are understood as naturally belonging to the technical scope of the present disclosure.

According to an aspect, by adopting a negative electrode having a novel protective layer structure, it is possible to provide a lithium metal battery having improved cycle characteristics.

A battery management device, device or system for preparing and/or controlling the preparation of a negative electrode or battery and/or any other relevant devices or components according to embodiments of the present invention described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or

more suitable changes in form and details may be made therein without departing from the spirit and scope of the disclosure as defined by the following claims and equivalents thereof.

## Claims

1. A negative electrode for a lithium metal battery, the negative electrode comprising:

   a negative electrode current collector; and
   a protective layer on the negative electrode current collector,
   wherein the protective layer comprises

      a first protective layer and
      a second protective layer between the first protective layer and the negative electrode current collector,

   the first protective layer comprises porous nanostructure particles, and
   the second protective layer comprises polar inorganic particles.

2. The negative electrode as claimed in claim 1, wherein the porous nanostructure particles comprise nanopores, and the nanopores have a size of 10 nanometer (nm) or less.

3. The negative electrode as claimed in claim 1 or 2, wherein the nanopores are arranged regularly or periodically, and negative ions are on surfaces of the nanopores.

4. The negative electrode as claimed any of the claims 1 to 3, wherein the porous nanostructure particles comprise a metal-organic framework (MOF), polyhedral oligomeric silsesquioxane (POSS), nanoporous silicon, nanoporous nitride oxide, or a combination thereof.

5. The negative electrode as claimed in any of the claims 1 to 4, wherein the porous nanostructure particles have a size of about 100 nm to about 5 micrometer ($\mu$m).

6. The negative electrode as claimed in any of the claims 1 to 5, wherein an amount of the porous nanostructure particles is about 50 wt% to about 99 wt% with respect to a total weight of the first protective layer.

7. The negative electrode as claimed in any of the claims 1 to 6, wherein a surface of the first protective layer comprises protrusions and depressions,

   the protrusions comprise the porous nanostructure particles, and the depressions comprise pores between adjacent porous nanostructure particles of the porous nanostructure particles and/or the first protective layer further comprises a first binder,
   the first binder comprises a fluorine-based binder, and
   the first protective layer comprises about 1 part by weight to about 50 parts by weight of the first binder with respect to about 100 parts by weight of the porous nanostructure particles.

8. The negative electrode as claimed in any of the claims 1 to 7, wherein the polar inorganic particles have a dielectric constant of at least 5.0 and have crystallinity, and/or the polar inorganic particles are nanoparticles having a size in nanoscale range of not more than 1 $\mu$m, and/or the polar inorganic particles have a size of about 10 nm to about 200 nm,

   the size of the polar inorganic particles is less than the size of the porous nanostructure particles, and
   the size of the polar inorganic particles is at most 50% of the size of the porous nanostructure particles, and/or
   the polar inorganic particles comprise LiF, LiOH, $Li_2O$, $Li_2CO_3$, $Li_3PO_4$, $LiAlO_2$, $Li_2O$-$Al_2O_3$-$SiO_2$-$P_2O_5$-$TiO_2$-$GeO_2$, $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, SiC, $Li_{3+x}La_3M_2O_{12}$ (wherein M=Te, Nb, or Zr and $0 \leq x \leq 5$), $Li_{1+x+y}Al_xTi_{2-x}Si_yP_{3-y}O_{12}$ (wherein $0<x<2$ and $0 \leq y<3$), $BaTiO_3$, $Pb(Zr_pTi_{1-p})O_3$ (PZT) (wherein $0 \leq p \leq 1$), $Pb_{1-x}La_xZr_{1-y}Ti_yO_3$ (PLZT) (wherein $0 \leq x<1$ and $0 \leq y<1$), $Pb(Mg_{1/3}Nb_{2/3})O_3$-$PbTiO_3$ (PMN-PT), $Li_xTi_y(PO_4)_3$ (wherein $0<x<2$ and $0<y<3$), $Li_xAl_yTi_z(PO_4)_3$ (wherein $0<x<2$, $0<y<1$, and $0<z<3$), $Li_{1+x+y}(Al_pGa_{1-p})_x(Ti_qGe_{1-q})_{2-x}Si_yP_{3-y}O_{12}$ (wherein $0 \leq x \leq 1$, $\leq y \leq 1$, $0 \leq p \leq 1$,

and $0 \leq q \leq 1$), $Li_xLa_yTiO_3$ (wherein $0<x<2$ and $0<y<3$), $Li_xGe_yP_zS_w$ (wherein $0<x<4$, $0<y<1$, $0<z<1$, and $0<w<5$), $Li_xN_y$ (wherein $0<x<4$ and $0<y<2$), $Li_xSi_yS_z$ (wherein $0<x<3$, $0<y<2$, and $0<z<4$), $Li_xP_yS_z$ (wherein $0 \leq x<3$, $0<y<3$, and $0<z<7$), or a combination thereof.

**9.** The negative electrode as claimed in any of the claims 1 to 8, wherein an amount of the polar inorganic particles is about 1 wt% to about 50 wt% of a total weight of the second protective layer.

**10.** The negative electrode as claimed in any of the claims 1 to 9, wherein the second protective layer further comprises a second binder, the second binder comprises a fluorine-based binder, and
the second protective layer comprises about 100 parts by weight to about 1,000 parts by weight of the second binder with respect to about 100 parts by weight of the polar inorganic particles.

**11.** The negative electrode as claimed in any of the claims 1 to 10, wherein the first protective layer has a thickness of about 100 nm to about 20 μm, the second protective layer has a thickness of about 100 nm to about 15 μm, and

the protective layer has a total thickness of about 200 nm to about 25 μm, and/or a thickness of the second protective layer is less than a thickness of the first protective layer, and
the thickness of the second protective layer is at most 95% of the thickness of the first protective layer.

**12.** The negative electrode as claimed in any of the claims 1 to 11, further comprising a negative electrode active material layer between the negative electrode current collector and the protective layer,

wherein the negative electrode active material layer comprises lithium metal or a lithium alloy and/or the negative electrode active material layer comprises lithium foil, lithium powder, plated lithium, carbon-based material, or a combination thereof, and
the negative electrode active material layer has a thickness of about 0.1 μm to about 80 μm.

**13.** A lithium metal battery comprising:

a positive electrode;
the negative electrode as claimed in any of the claims 1 to 12; and
an electrolyte between the positive electrode and the negative electrode.

**14.** The lithium metal battery as claimed in claim 13, wherein the electrolyte comprises a liquid electrolyte, a solid electrolyte, a gel electrolyte or a combination thereof,

the solid electrolyte comprises an oxide-based solid electrolyte, a sulfide-based solid electrolyte, a polymer electrolyte, or a combination thereof, and
the gel electrolyte comprises a polymer gel electrolyte, and/or the positive electrode comprises a positive electrode current collector and the negative electrode comprises a negative electrode current collector,
wherein at least one of the positive electrode current collector or the negative electrode current collector comprises a base film and a metal layer on at least one surface of the base film,
the polymer comprises polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

**15.** A method of preparing a negative electrode for a lithium metal battery, the method comprising:

providing a negative electrode current collector;
providing a second protective layer on the negative electrode current collector; and
providing a first protective layer on the second protective layer, and
optionally providing a negative electrode active layer between the second protective layer and the negative electrode current collector.
wherein the second protective layer comprises porous nanostructure particles, and
the first protective layer comprises polar inorganic particles.

FIG. 1

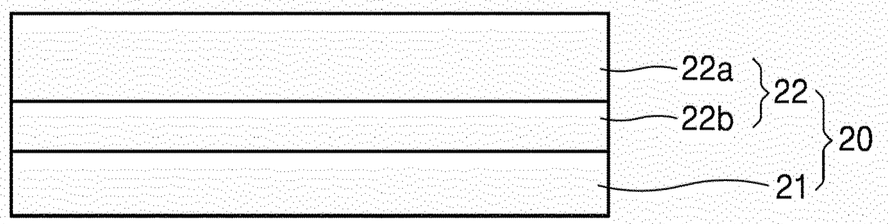

FIG. 2

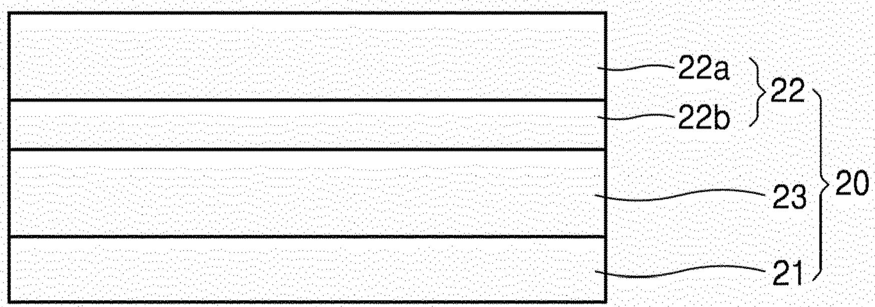

FIG. 3

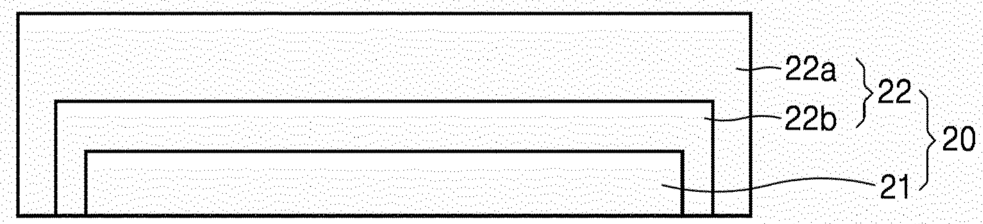

FIG. 4

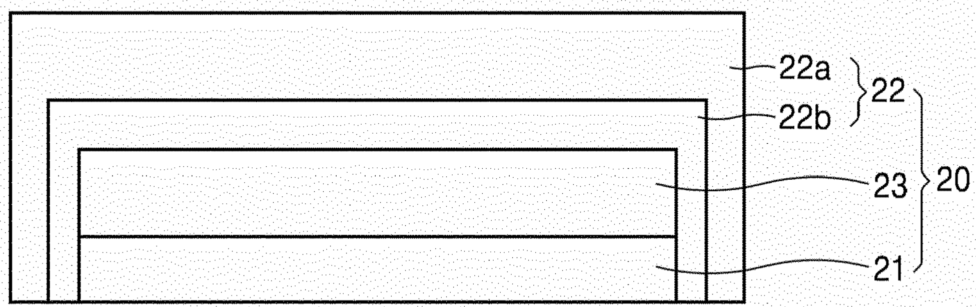

FIG. 5

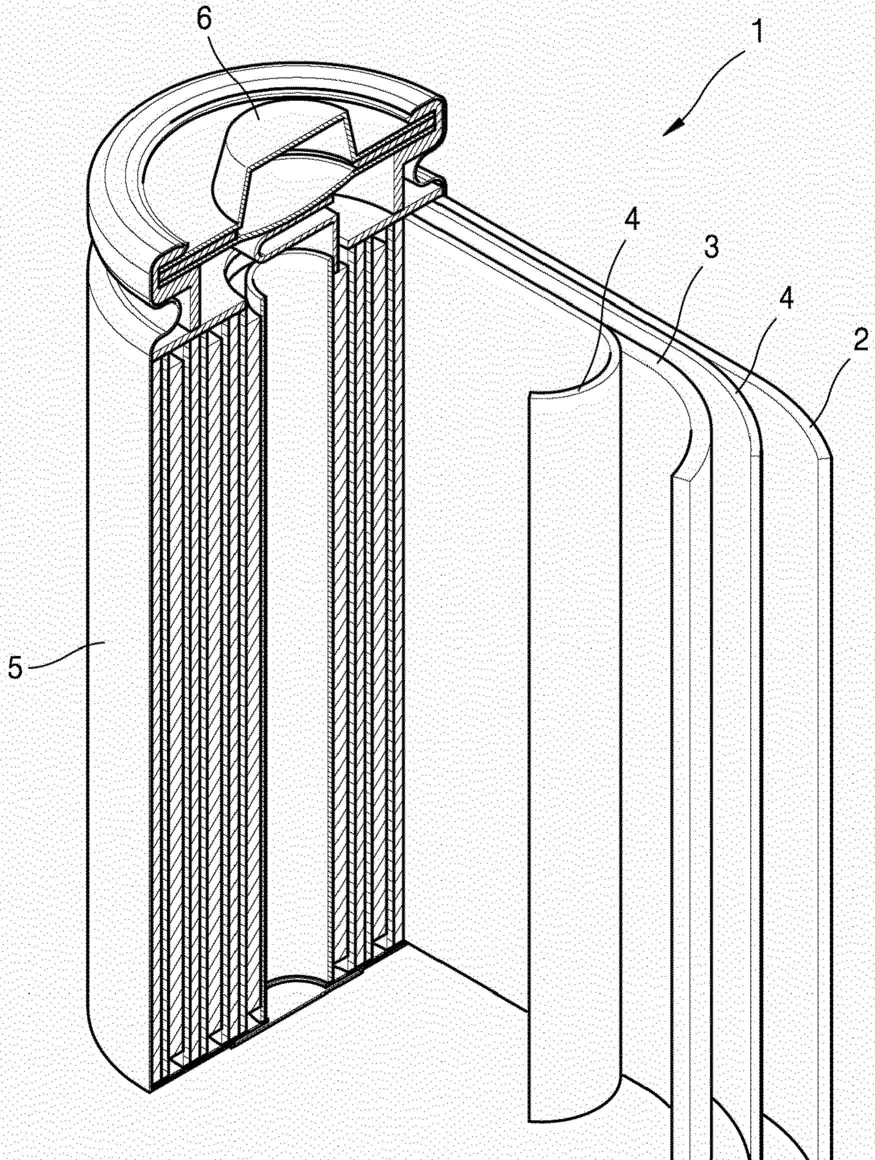

FIG. 6

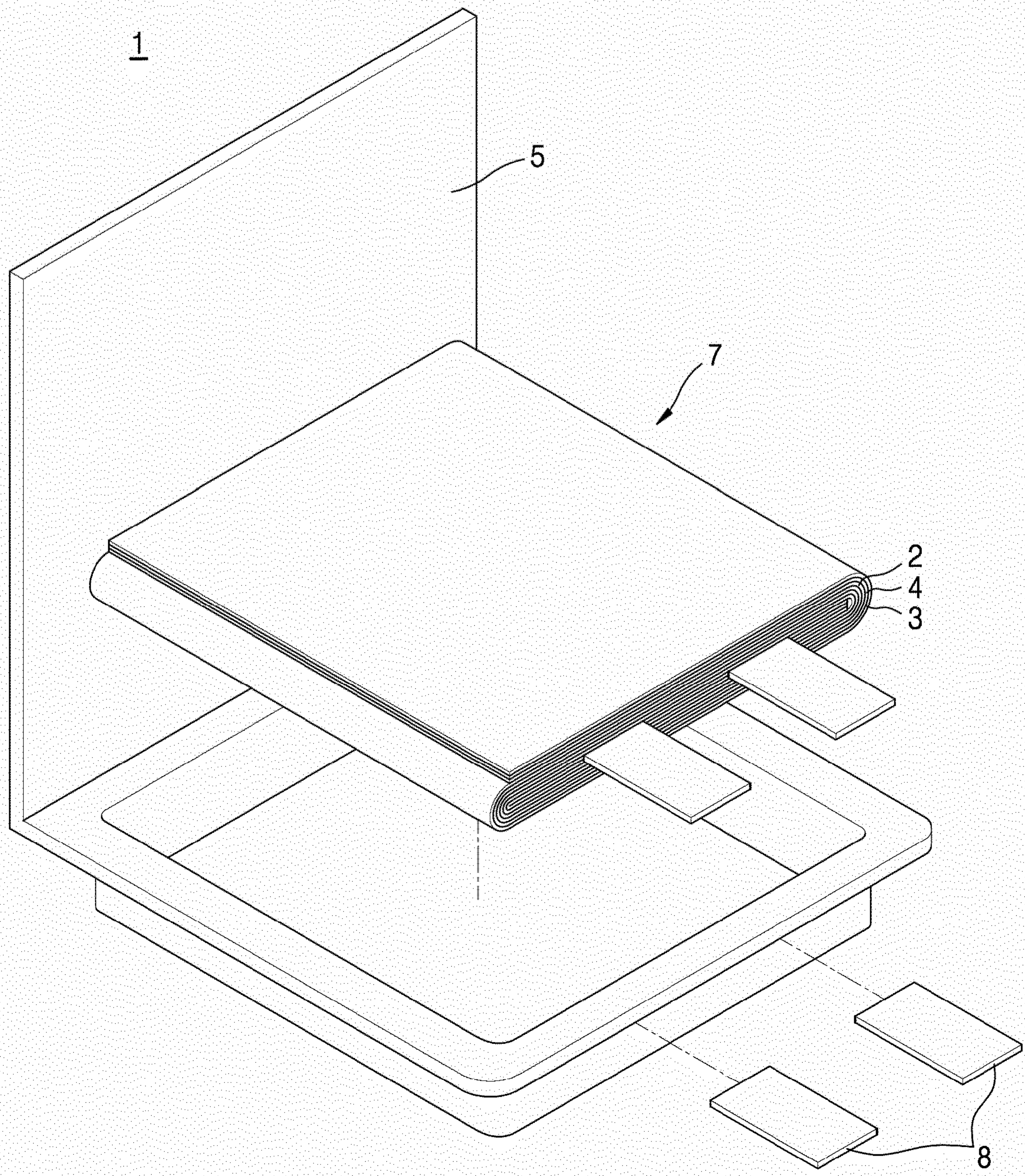

FIG. 7

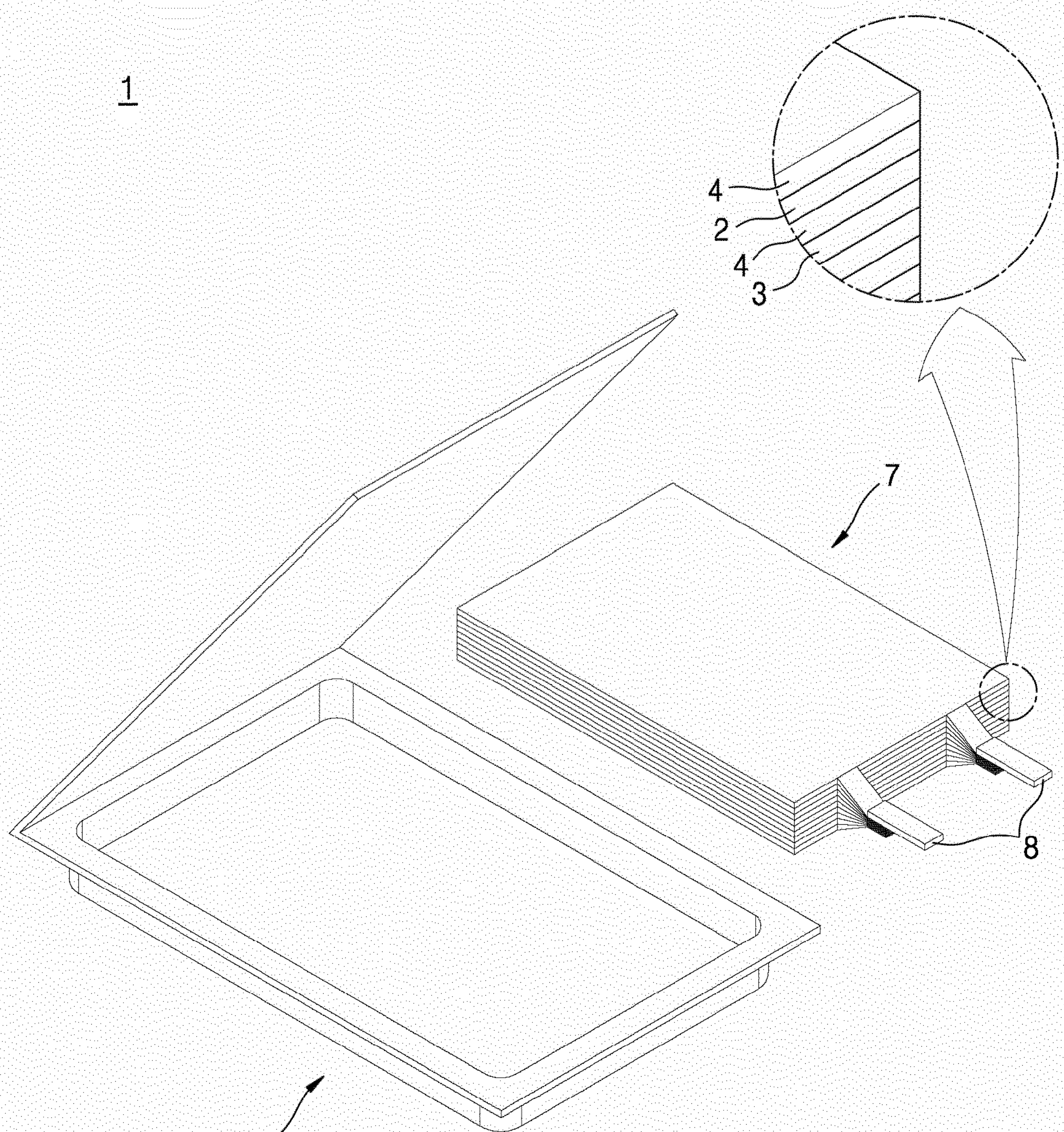

FIG. 8

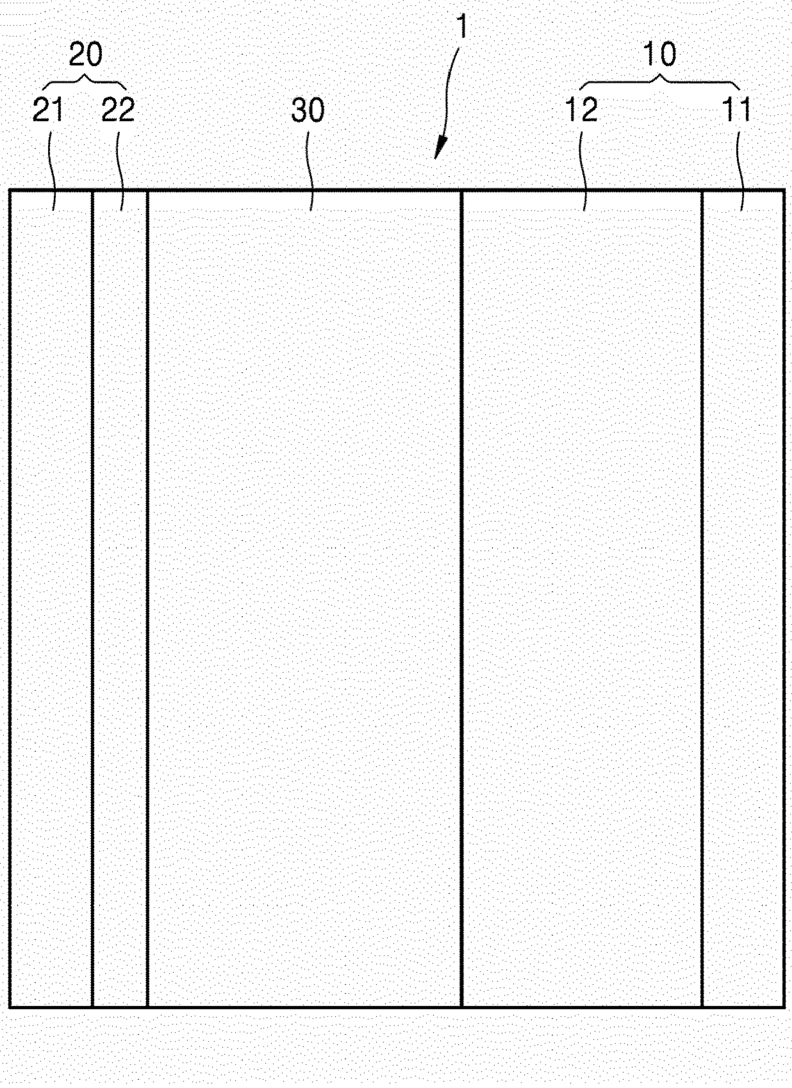

FIG. 9

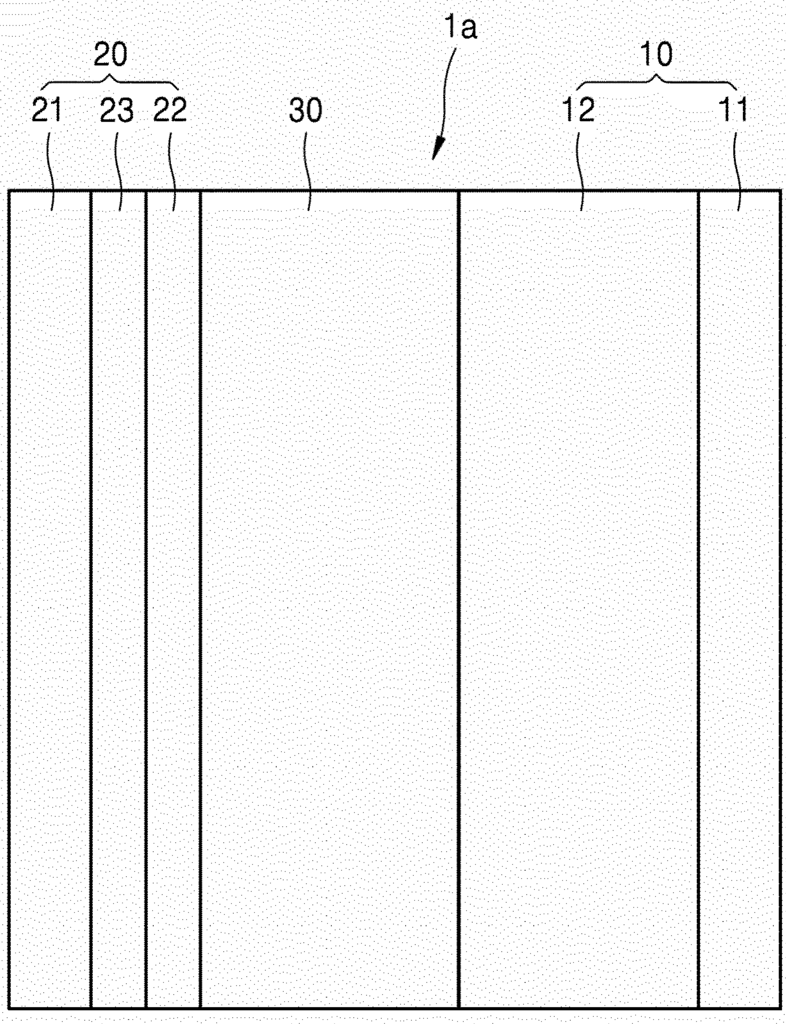

FIG. 10

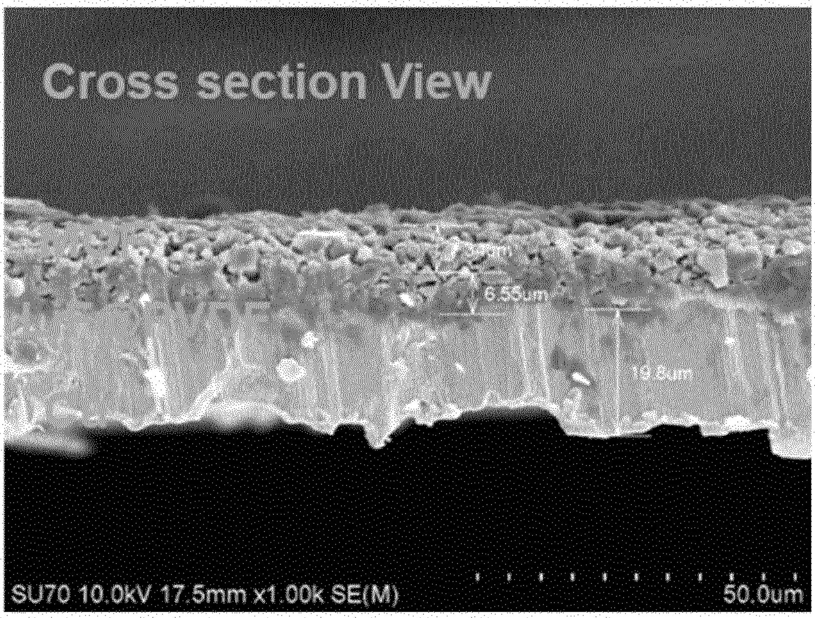
Cross section View
6.55um
19.8um
SU70 10.0kV 17.5mm x1.00k SE(M)
50.0um

FIG. 11

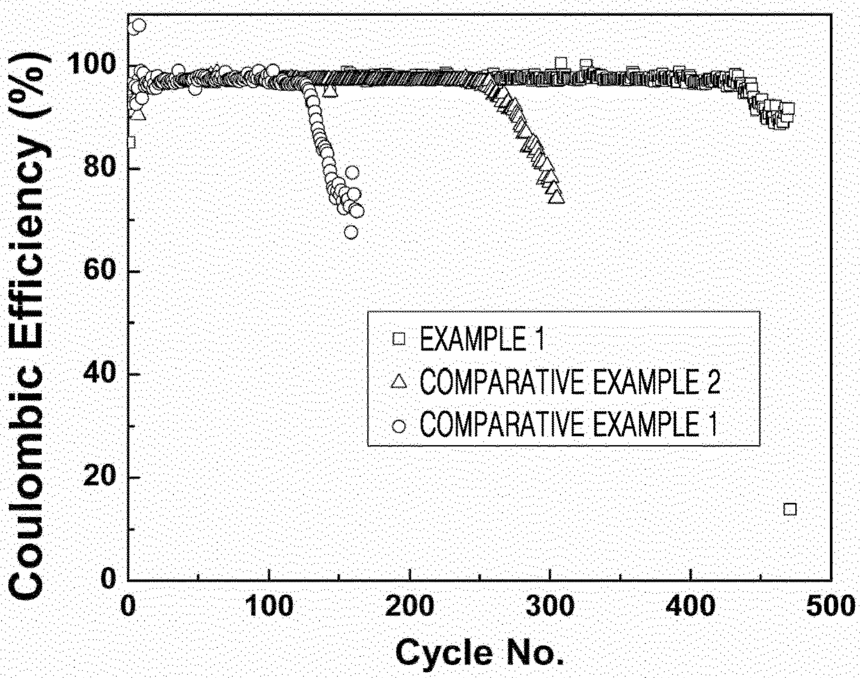
Coulombic Efficiency (%)
Cycle No.
0
20
40
60
80
100
0
100
200
300
400
500
EXAMPLE 1
COMPARATIVE EXAMPLE 2
COMPARATIVE EXAMPLE 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220118146